(19)

**Europäisches Patentamt**
**European Patent Office**
**Office européen des brevets**

(11) **EP 3 989 739 B1**

(12) **EUROPEAN PATENT SPECIFICATION**

(45) Date of publication and mention
of the grant of the patent:
**12.11.2025 Bulletin 2025/46**

(21) Application number: **20735339.2**

(22) Date of filing: **26.06.2020**

(51) International Patent Classification (IPC):
**A23L 19/00** (2016.01)     **A23L 19/18** (2016.01)

(52) Cooperative Patent Classification (CPC):
**A23L 19/19; A23L 19/09; A23L 29/212**

(86) International application number:
**PCT/EP2020/068116**

(87) International publication number:
**WO 2020/260646 (30.12.2020 Gazette 2020/53)**

(54) **VEGETABLE- AND/OR FRUIT-CONTAINING SNACK FOODS AND MANUFACTURE THEREOF**

GEMÜSE- UND/ODER OBSTHALTIGE IMBISSE UND IHRE HERSTELLUNG

EN-CAS CONTENANT DES LÉGUMES ET/OU DES FRUITS ET LEUR FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.06.2019   GB 201909324**

(43) Date of publication of application:
**04.05.2022   Bulletin 2022/18**

(73) Proprietor: **Frito-Lay Trading Company GmbH
3011 Bern (CH)**

(72) Inventors:
• **SAIBENE, Debora
  Leicester Leicestershire LE2 3EE (GB)**
• **REASON, Rebecca
  Cropston Leicestershire LE7 7HN (GB)**

(74) Representative: **McNamara, Kathryn
Novagraaf UK
Centrum
Norwich Research Park
Colney Lane
Norwich, Norfolk NR4 7UG (GB)**

(56) References cited:
**US-A- 4 970 084**

• DATABASE GNPD [online] MINTEL; 23 July 2014 (2014-07-23), ANONYMOUS: "Peach Flavoured Fruit Crisps", XP055730054, retrieved from www.gnpd.com Database accession no. 2561619
• DATABASE GNPD [online] MINTEL; 23 July 2014 (2014-07-23), ANONYMOUS: "Orange Flavoured Fruit Crisps", XP055730058, retrieved from www.gnpd.com Database accession no. 2561629
• DATABASE GNPD [online] MINTEL; 4 May 2017 (2017-05-04), ANONYMOUS: "Kale & Sea Salt Crackers", XP055730060, retrieved from www.gnpd.com Database accession no. 4787603

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a non-fried vegetable- and/or fruit-containing snack foods and to methods of manufacture of such snack foods. In particular, the present invention relates to non-fried snack foods which combine pieces of vegetable(s) and/or fruit(s) with additional ingredients forming a starch-based matrix to manufacture a snack food product which has a characteristic and unique bimodal texture, with regions that are both different in mouthfeel and visually distinct. This characteristic texture is a function of the unique microstructure of the snack food product, which is in turn achieved by a particular method of manufacture of the snack food from the vegetable and/or fruit pieces, together with additional ingredients to form a starch-based matrix.

There is an increasing recognition of the need to consume healthy foods. In the field of snack foods, there has been a recent focus on producing snack foods which have a significant content of vegetable and/or fruit matter and have a high nutritional content.

With respect to the consumer need in the field of snack foods, fresh vegetables and fruit provide a wide range of nutrients considered to be good to health and wellbeing, but can be inconvenient in its whole form, for example being wet or messy, having a short shelf life, and being time consuming to eat. There are government schemes in a large number of countries that encourage consumers to eat more servings of fruit and vegetables. There are a range of formats in which vegetables and fruit can be considered to qualify as a serving contributing to vegetable or fruit intake, including but not limited to, fresh, dried, powdered, fried, puree, concentrated puree, juice, concentrated juice, and pomace. This gives manufacturers a range of ingredients and raw materials that can be used within processed foods in order to provide 'vegetable content' or 'fruit content' for the consumer.

Due to the rising consumer concern for health and well-being, vegetable and fruit snacks with a "clean label" are gaining popularity; i.e. the snacks comprise ingredients that are perceived by consumers as being natural, familiar, simple ingredients that are easy to recognize, understand, and pronounce and are not artificial ingredients or synthetic chemicals. Traditional manufacturing processes present multiple challenges in either forming and/or dehydrating fabricated snacks with visible pieces of fruit and vegetable. Hence, currently commercially available fruit or vegetable snacks tend to be limited to slices which have been dehydrated and/or fried, or the use of fruit or vegetable powders, juices and/or purees.

The use of fruit and vegetable in fabricated snack food manufacturing is often limited due to the inherent high moisture content of these ingredients which hinders or makes economically unfeasible the forming and/or dehydration process. This issue is often overcome using dehydrated materials (most commonly powders, followed by flakes and rarely pieces) or by restricting the amount of fruit or vegetable to control the overall moisture of the mix. This latter approach does not allow for the manufacturing of snack foods with fruit or vegetables as the leading ingredients in the ingredient declaration.

Another challenge often encountered in the manufacturing of such snack foods is linked to the shaping and sizing of the ingredients itself. Fruit and vegetable are often the most expensive ingredients in these products, and as such it is preferable to maintain visible pieces of fruit and vegetable that the consumer can recognise. However, the most common manufacturing processes for non-fried snack foods rely on extrusion, sheeting, moulding and/or cutting which require a fairly smooth mix. For this reason, fruit and vegetable are mostly used in the form of juices or purees.

US 4,970,084 discloses a fried snack food product comprising individual non-potato food pieces.

There is a need in the art for a method that allows the manufacturing of non-fried fabricated vegetable and/or fruit snack foods with attractive sensory and visual properties, allowing to retain discernible and recognizable pieces of fruits or vegetables in the finished snack food.

The present invention aims to meet his need and in particular to provide a vegetable- and/or fruit-based snack food which has the combination of a bimodal texture and associated mouth feel, and a distinct bimodal visual appearance.

The present invention also aims to provide a method of manufacturing such a vegetable- and/or fruit-based snack food.

## <u>Summary</u>

In a first aspect the present invention provides a non-fried vegetable- and/or fruit-containing snack food, the non-fried snack food comprising a sheet having a thickness of from 1 to 8 mm, the sheet comprising a rigid starch matrix comprising potato starch and a plurality of individual pieces of vegetable and/or fruit randomly distributed throughout the matrix, wherein at least 50 % by number of the pieces have a minimum dimension of at least 0.75 mm and a maximum dimension of up to 7 mm, wherein the matrix defines therein a first cellular structure of first cellular pores having a first pore size distribution and the pieces define therein a second cellular structure of second cellular pores having a second pore size distribution, at least some of the second cellular pores are defined by polysaccharide cell walls of the respective vegetable and/or fruit, and the first pore size distribution has a larger number-average pore size and a wider distribution than the second pore size distribution, wherein starch in the rigid starch matrix consists of 100 wt% potato starch based on the total weight of the starch in the rigid starch matrix, and wherein the non-fried snack food has a vegetable and/or fruit solids content from the pieces, on a dry basis, of from 10 to 30 wt% based on the weight of the non-fried snack food.

In preferred embodiments of the non-fried snack food of the present invention, the first pore size distribution has a number-average pore size $\Phi_{2D}$ within the range of from 100 to 300 $\mu$m, preferably with a normalised standard deviation of from 0.75 to 2, and the second pore size distribution has a number-average pore size $\Phi_{2D}$ within the range of from 20 to 90 $\mu$m, preferably with a normalised standard deviation of from 0.25 to 0.9.

In further preferred embodiments, the first pore size distribution has a number-average pore size $\Phi_{2D}$ within the range of from 120 to 250 $\mu$m, preferably with a normalised standard deviation of from 0.85 to 1.75, and the second pore size distribution has a number-average pore size $\Phi_{2D}$ within the range of from 25 to 75 $\mu$m, preferably with a normalised standard deviation of from 0.3 to 0.75.

In preferred embodiments of the non-fried snack food of the present invention, the first pore size distribution has a number-average pore size $\Phi_{3D}$ within the range of from 150 to 375 $\mu$m, and the second pore size distribution has a number-average pore size $\Phi_{3D}$ within the range of from 25 to 100 $\mu$m. Optionally, the first pore size distribution has a number-average pore size $\Phi_{3D}$ within the range of from 150 to 300 $\mu$m and the second pore size distribution has a number-average pore size $\Phi_{3D}$ within the range of from 25 to 75 $\mu$m.

In preferred embodiments of the snack food of the present invention, the first pore size distribution has a smaller cell density value $N_v$ than the second pore size distribution.

Optionally, the first pore size distribution has from 250 to 2000 pores per unit area $N_v$ and the second pore size distribution has from $2.5 \times 10^3$ to $1 \times 10^5$ pores per unit area $N_v$. Further optionally, the first pore size distribution has from 450 to 1250 pores per unit area $N_v$ and the second pore size distribution has from $2.5 \times 10^3$ to $5 \times 10^4$ pores per unit area $N_v$.

In preferred embodiments of the non-fried snack food of the present invention, the first cellular pores have a number-average anisotropy ratio $R_{max}$ which is greater than a number-average anisotropy ratio of the second cellular pores. Optionally, the first cellular pores have a number-average anisotropy ratio $R_{max}$ of from 2 to 2.75 and the second cellular pores have a number-average anisotropy ratio $R_{max}$ of from 1.25 to 1.95. Further optionally, the first cellular pores have a number-average anisotropy ratio $R_{max}$ of from 2.1 to 2.6 and the second cellular pores have a number-average anisotropy ratio $R_{max}$ of from 1.35 to 1.90.

In preferred embodiments of the non-fried snack food of the present invention, at least 90 % by number of the pieces have a minimum dimension of at least 1 mm, or at least 2 mm.

In preferred embodiments of the non-fried snack food of the present invention, the pieces comprise or consist of vegetable pieces and comprise at least one root vegetable, optionally selected from beetroot and carrot, and/or at least one allium vegetable, optionally selected from onion, garlic, shallot, chive and scallion, and/or at least one cucurbit vegetable, optionally selected from butternut squash, pumpkin, spaghetti squash, cucumber, or marrow.

In preferred embodiments of the non-fried snack food of the present invention, the pieces comprise or consist of fruit pieces, optionally selected from apple and pear.

In preferred embodiments of the non-fried snack food of the present invention, the pieces comprise vegetable and/or fruit comprising less than 33 wt% starch on a dry basis based on the weight of the vegetable and/or fruit pieces in the non-fried snack food.

In preferred embodiments of the non-fried snack food of the present invention, the vegetable and/or fruit pieces are comprised of one or more vegetables and/or fruits that in the raw state have a starch content of no more than 5 wt% and a water content of at least 85 wt%, each wt% being based up the total weight of the respective raw vegetable(s) and/or fruit(s).

In preferred embodiments of the non-fried snack food of the present invention, the non-fried snack food has a weight ratio of rigid starch matrix: pieces of vegetable and/or fruit of from 1:9 to 6:1.

In preferred embodiments of the non-fried snack food of the present invention, the moisture content of the snack food is from 0.5 to 5 wt% based on the weight of the non-fried snack food.

In preferred embodiments of the non-fried snack food of the present invention, the sheet is in the form of a snack food chip and has a thickness of from 1 to 5 mm, optionally from 1 to 3 mm, further optionally from 1 to 2 mm.

In a further aspect, the present invention provides a method of manufacturing a vegetable- and/or fruit-containing non-fried snack food according to the first aspect, the method comprising the steps of:

a. providing a mash comprising mashed potato that has been at least partly cooked, wherein the mashed potato has been produced using fresh potato, dehydrated potato or any combination thereof;

b. providing a plurality of pieces of at least one vegetable and/or fruit ingredient that is raw or has been at least partly cooked, wherein at least 50 % by number of the pieces have a minimum dimension of at least 0.75 mm and a maximum dimension of up to 7 mm;

c. mixing together the mash and the pieces of the at least one vegetable and/or fruit ingredient to form a dough mixture that has a moisture content of from 60 to 80 wt% based on the weight of the dough;

d. forming the dough mixture into a plurality of individual sheets having a thickness of from 1 to 8 mm;

e. microwave cooking each sheet to produce an intermediate cooked sheet that has a moisture content of from 25 to 45 wt% based on the weight of the intermediate cooked sheet;

f. cooking the intermediate cooked sheet in a hot air convection oven to produce a cooked snack food sheet that has a moisture content of from greater than 5 to up to 12 wt% based on the weight of the cooked snack food sheet; and

g. dehydrating the cooked snack food sheet to reduce the moisture content of the resultant cooked product to within the range of from 0.5 to 5 wt% based on the weight of the dehydrated cooked snack food sheet, wherein the dehydrated cooked snack food sheet comprises a rigid starch matrix and a plurality of individual pieces of vegetable and/or fruit randomly distributed throughout the matrix, wherein at least 50 % by number of the pieces have a minimum dimension of at least 0.75 mm and a maximum dimension of up to 7 mm;

wherein starch in the rigid starch matrix consists of 100 wt% potato starch based on the total weight of the starch in the rigid starch matrix, and wherein the non-fried snack food has a vegetable and/or fruit solids content from the pieces, on a dry basis, of from 10 to 30 wt% based on the weight of the non-fried snack food.

In preferred embodiments of the method of the present invention, the mashed potato provided in step a is previously steam cooked at a temperature of at least 80°C for a period of from 5 to 30 minutes, optionally from 10 to 20 minutes.

In preferred embodiments of the method of the present invention, the at least one vegetable and/or fruit ingredient provided in step b is previously steam cooked at a temperature of at least 100°C for a period of from 5 to 15 minutes, optionally from 5 to 10 minutes.

In preferred embodiments of the method of the present invention, the pieces provided in step b are produced by at least partly cooking fresh or frozen vegetable and/or fruit and subsequently comminuting the at least partly cooked vegetable and/or fruit to form the pieces; or the pieces provided in step b are raw vegetable and/or fruit and are comminuted to form the vegetable and/or fruit pieces.

In preferred embodiments of the method of the present invention, in step e the microwave cooking is carried out at a power density of from 15-25kW/kg of the dough sheets for a period of from 30 to 150 seconds, optionally from 50 to 100 seconds.

In preferred embodiments of the method of the present invention, in step f the hot air convection cooking is carried out at an oven temperature of from 120 to 180°C for a period of from 1 to 5 minutes, optionally about 3 minutes.

In preferred embodiments of the method of the present invention, in step g the dehydration is carried out at in a dehydrator at a dehydrator temperature of from 100 to 120°C for a period of from 6 to 15 minutes.

In preferred embodiments of the method of the present invention, in the dehydrated cooked snack food sheet at least 90 % by number of the pieces have a minimum dimension of at least 1 mm, or at least 2 mm.

In preferred embodiments of the method of the present invention, the vegetable and/or fruit pieces provided in step b are comprised of one or more vegetables and/or fruits that have a starch content of no more than 5 wt% and a water content of at least 85 wt%, each wt% being based up the total weight of the respective raw vegetable(s) and/or fruit(s); and/or the pieces comprise or consist of vegetable pieces and comprise at least one root vegetable, optionally selected from beetroot and carrot, and/or at least one allium vegetable, optionally selected from onion, garlic, shallot, chive and scallion, and/or at least one cucurbit vegetable, optionally selected from butternut squash, pumpkin, spaghetti squash, cucumber, or marrow; and/or the pieces comprise or consist of fruit pieces, optionally selected from apple and pear.

In preferred embodiments of the method of the present invention, the dehydrated cooked snack food sheet has a weight ratio of rigid starch matrix: pieces of vegetable and/or fruit of from 1:9 to 6:1; and/or the moisture content of the dehydrated cooked snack food sheet is from 0.5 to 2 wt% based on the weight of the dehydrated cooked snack food sheet; and/or the dehydrated cooked snack food sheet is in the form of a snack food chip and has a thickness of from 1 to 5 mm, optionally from 1 to 3 mm, further optionally from 1 to 2 mm.

In preferred embodiments of the method of the present invention, the dough mixture formed in step c comprises the following ingredients based on the total weight of the dough mixture on a wet weight basis: 35-65 wt% vegetable(s) mashed, chopped and/or shredded; 20-50 wt% potato mash; 7-16 wt% dehydrated/dry ingredients; and 1-10 wt% herbs and spices.

## Detailed Description

The preferred embodiments of the present invention can provide a non-fried fabricated snack food which incorporates a high percentages of visible pieces of fruit and/or vegetables. Such ingredients are shaped and sized as individual pieces which can be mixed within a starch-based matrix, fabricated into a flat slice or cracker shape, and dehydrated. The final fruit and/or vegetable pieces are maintained as recognisable, both by mouthfeel and visually, in the finished snack by retaining the natural cellular structure of the pieces within the mix throughout the drying process which is applied for the manufacturing of the finished snack food.

The preferred embodiments of the present invention can therefore provide a non-fried fabricated snack food having a bimodal structure - a first mode is provided by a starch-based matrix having a first pore size distribution and a second mode is provided by a plurality of fruit and/or vegetable pieces having a second pore size distribution within the starch-based matrix.

In accordance with the preferred embodiments of the present invention, quantitative analysis of microscopy and/or X-ray images is used to characterise the respective pore size distributions of the fruit and/or vegetables pieces as compared to the starch-based matrix, thus resulting in a unique signature for the structure of the non-fried snack food product. In particular, the analysis of snack food chips manufactured with vegetables, for example beetroot, carrots and onions, showed that the natural cellular structure of the vegetables is maintained in the finished dehydrated snack food chips. Microscopy and X-ray analysis of sections of the snack food chips revealed a clear distinction between the pores formed in the starch-based matrix and pores retained by the natural cellular structure of the vegetable inclusions.

The preferred embodiments of the present invention can manufacture fabricated snack foods with fresh or frozen vegetable and/or fruit, which fills a gap in the current snack food market.

The preferred embodiments of the present invention provide a fabricated non-fried snack food with high weight percentages of fresh or frozen fruit and/or vegetables which are embedded into a starch-based matrix. The pieces of fruit and/or vegetable can be added to the mix either raw or cooked. The mix is then sheeted and cut, or otherwise moulded into individual sheet shapes, and cooked and dehydrated in series by the use of microwave and hot air convection (e.g. impingement) ovens, and then a final dehydrator.

The preferred embodiments of the present invention can accordingly achieve the technical benefit of obtaining a non-fried snack food which contains up to 60 wt% vegetable/fruit (wet basis) sized into pieces up to 5 cm in length, typically up to 2 cm in length, which are still visually discernible and visually recognizable as fruit/vegetable in the finished snack food product, and provide, by combination with the starch-based matrix, a distinct bimodal mouthfeel as a result of the different respective pore size distributions of the fruit and/or vegetables pieces as compared to the starch-based matrix.

The preferred embodiments of the present invention therefore can produce a new generation of fabricated non-fried snack foods having vegetable and/or fruit pieces exhibiting a more natural looking appearance as compared to known snack foods incorporating vegetable and/or fruit powders, purees, etc into a dough to form a starch-based matrix.

### Figures

Embodiments of the present invention will now be described by way of example only, with reference to the accompanying drawings, in which:

Figure 1 shows a flow chart illustrating a method of manufacturing a vegetable- and/or fruit-containing non-fried snack food in accordance with an embodiment of the present invention;

Figure 2 shows a cross-section, taken by scanning electron microscopy (SEM), through a vegetable-containing non-fried snack food (not in accordance with the present invention);

Figure 3 is an enlarged view of part of the cross-section of Figure 2 (not in accordance with the present invention);

Figure 4 shows a cross-section, taken by scanning electron microscopy (SEM), through a vegetable-containing non-fried snack food (not in accordance with the present invention);

Figure 5 illustrates how a given cellular pore is measured to determine the cellular pore size dimension;

Figure 6 shows a cross-section, taken by scanning electron microscopy (SEM), through a vegetable-containing non-fried snack food (not in accordance with the present invention), showing how, using imaging and analysis software, a region of the starch matrix is selected, the software identifies pores in the matrix, and the pores are then measured and various parameters calculated;

Figure 7 shows a cross-section, taken by scanning electron microscopy (SEM), through a vegetable-containing non-fried snack food (not in accordance with the present invention) together with enlarged views of three portions of the SEM;

Figure 8 shows an X-ray image which distinguishes between the starch matrix and the vegetable/fruit pieces in a non-fried snack food produced in accordance with a further embodiment of the present invention;

Figure 9 shows how the anisotropy ratio $R_i$ is calculated from the maximum width value $t_{max}$ and a value $t_{perp}$ of the width that is perpendicular to the maximum width;

Figure 10 shows a cross-section, taken by X-ray tomography analysis through a vegetable containing non-fried snack food produced in accordance with one embodiment of the present invention showing microporosity detected in the product;

Figure 11 shows a portion of the cross-section of Figure 10 at a higher magnification;

Figure 12 shows a high magnification of a piece of asparagus from a non-fried snack food product produced in accordance with one embodiment of the present invention.

Figure 13 shows a closer magnification of Figure 12.

Figures 14a and 14b show a cross-section, taken by scanning electron microscopy (SEM), through a known vegetable-containing snack food, Figure 14a showing matrix pores highlighted by analytical software, and Figure 14b showing an unhighlighted image.

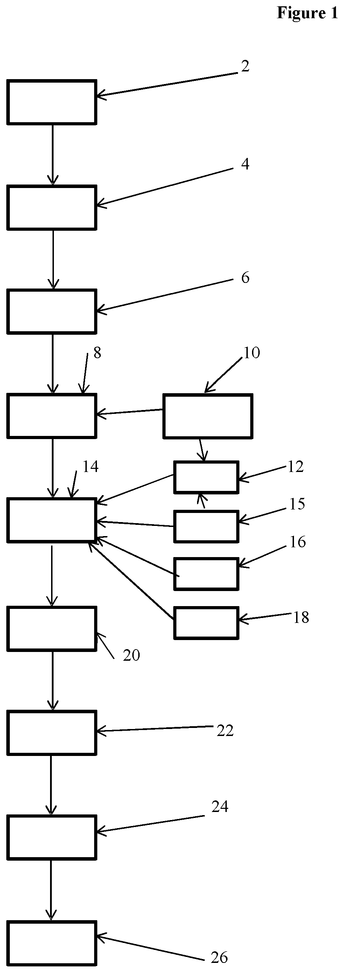

Referring to Figure 1, the flow chart illustrates one embodiment of a method of manufacturing a non-fried vegetable-containing snack food.

In a first step 2 fresh potatoes are peeled and washed in fresh water, typically the water being at a temperature within the range of 5 to 30°C. In a second step 4, the peeled and washed potatoes are cut into slabs, typically having a thickness of from 2 to 50 mm. The slabs are then subjected to a steam cooking step 6, in which the slabs are steam cooked at a temperature of at least 80°C, optionally at a temperature of 100°C, for a period of from 5 to 30 minutes, for example from 10 to 20 minutes. This steam cooking step 6 at least partly cooks the potato.

Thereafter the steam cooked potato is subjected to a mashing step 8 in which the potatoes are mechanically worked, for example by a conventional mashing apparatus, to form a smooth and consistent potato mash.

Fresh and/or frozen vegetables are subjected to a steam cooking step 10, in which the fresh and/or frozen vegetables, which are in a whole or previously cut form, are steam cooked at a temperature of at least 100°C, for example up to 250°C, for a period of from 5 to 15 minutes, optionally from 5 to 10 minutes This steam cooking step 10 blanches or at least partly cooks the vegetables.

After the vegetable steam cooking step 10, the vegetables may be in a comminuted form as a plurality of vegetable pieces, wherein at least 50 % by number of the pieces have a minimum dimension of at least 0.75 mm and a maximum dimension of up to 7 mm.

Additionally or alternatively, raw vegetable may be used to form the vegetable pieces, and added at step 15.

If the vegetables are in that comminuted form, the vegetables are added to the potato mash in a mixing step 14. If however the vegetables are not in that desired comminuted form, the vegetables are optionally subjected to a size reduction step 12 in which the vegetables are comminuted to achieve the desired size and size distribution of the vegetable pieces, and then added in such comminuted form to potato mash in the mixing step 14. For example, the vegetables may be shredded to achieve the desired piece size.

The vegetable pieces are composed of one or more non-potato vegetables.

The potatoes provide starch to form a starch matrix in the snack food product. In contrast, the vegetable pieces are comprised of one or more vegetables that have no or low starch content. For example, the vegetable pieces are comprised of one or more vegetables that have a starch content of no more than 5 wt% and a water content of at least 85 wt%, each wt% being based up the total weight of the respective raw vegetable(s). By providing a low or no starch content and a high water content, the desired cellular void microstructure can be formed in the vegetable pieces in the final snack food product.

Optional additional ingredients may be added to the potato mash and vegetables in the mixing step 14. Thus as shown by adding step 16 minor ingredients may be added, such as dry ingredients and inclusions, as other vegetable and seasoning components may also be added at this stage. The dry ingredients may include, for example, any suitable flour such as cereal flour, vegetable flour, legume flour and/or pulse flour; potato flakes; vegetable powder or granules, such as onion, garlic and/or beetroot powder or granules; pastes, creams, purees, such as coconut cream, garlic puree; and other seasonings, such as pepper, chili, ginger, lemongrass ginger, and coriander. Inclusions may include, for example, seeds such as sesame seeds. A wide range of suitable additional ingredients may be used according to the desired visual appearance seasoning of any given recipe. A vegetable oil, such as a high oleic acid sunflower oil (HOSO) may also be added to the mixing step 14 by oil adding step 18.

A typical recipe for a snack food containing vegetables in accordance with an embodiment of the present invention comprises the following ingredients based on the total weight of the dough on a wet weight basis:

(i) vegetable(s)/fruit(s) mashed, chopped and/or shredded - 35-65 wt%;
(ii) potato mash - 10-50 wt%;
(iii) dehydrated/dry ingredients - 7-16 wt%; and
(iv) herbs and spices - 1-10 wt%.

The total ingredients combined being 100%.

Component (i) provides vegetable pieces, for example in the form of chunks or shreds, which are visible to the naked eye in the snack food product and provide a desired, preferably vibrant, colour to the snack food product. Fundamentally, the vegetable pieces include cellular wall material, ideally intact vegetable cells, from the raw, fresh or frozen vegetable, for example from grated fresh vegetable, which provides high vegetable flavour and good individual texture and visual appeal of the individual vegetable pieces within the starch matrix of the final snack food product. The vegetable pieces are raw or at least partially cooked.

Preferably the dough comprises 35-65 wt% of vegetable(s)/fruit(s) based on the total weight of the dough on a wet basis. However, in some embodiments, the dough may comprise up to 85 wt% of vegetable(s)/fruit(s) based on the total weight of the dough on a wet basis. For example, the dough may comprise up to about 80 wt% of vegetable(s)/fruit(s) based on the total weight of the dough on a wet basis, or up to about 75 wt%, or up to about 70 wt%. It may alternatively be said that the dough comprises at least about 40 wt% of vegetable(s)/fruit(s) based on the total weight of the dough on a wet basis. For example, the dough may comprise at least about 50 wt% of vegetable(s)/fruit(s) based on the total weight of the dough on a wet basis, or at least about 60 wt%.

Component (ii) provides cohesiveness to the dough and rheological properties to enable the dough to be reliably sheeted and shaped, e.g. die-cut. The mashed potato has been produced using fresh potato, dehydrated potato, for example potato flakes and/or powder, or any combination thereof.

Component (iii) provides rheological properties to enable the dough to be reliably sheeted and shaped using clean label ingredients (i.e. ingredients that are perceived by consumers as being natural, familiar, simple ingredients that are easy to recognize, understand, and pronounce and are not artificial ingredients or synthetic chemicals).

Component (iv) provides a desired flavouring to the final snack food product. The herbs and spices preferably also provide a desired base colour to the starch matrix and/or provide particles or flecks that are visible to the naked eye and enhance the flavour and visual appeal of the final snack food product.

In the mixing step 14 the mash and the raw or partially cooked vegetable pieces, and the optional additional ingredients, are mixed together, preferably in a conventional dough mixer, to form a dough mixture that typically has a moisture content of from 60 to 80 wt% based on the weight of the dough.

After a uniform and consistent dough has been formed, in a forming step 20 the dough mixture is sheeted and then formed, e.g. die-cut, to form plurality of individual dough sheets having a thickness of from 1 to 8 mm. The sheeting and die-cutting steps use conventional apparatus used for the manufacture of snack food chips. The dough sheets may have any desired shape and dimensions in plan.

Thereafter, in a microwave cooking step 22 the dough sheets are subjected to microwave cooking to produce an intermediate cooked sheet that has a moisture content of from 25 to 45 wt% based on the weight of the intermediate cooked sheet. The microwave cooking step 22 is preferably carried out by conveying the dough sheets through a multi-zone flatbed microwave cooking apparatus. Typically, the microwave cooking is carried out at a power density of from 15-25kW/kg of the dough sheets for a period of from 30 to 150 seconds, optionally from 50 to 100 seconds.

After the microwave cooking step 22, the intermediate cooked sheets are subjected to an hot air convection cooking step 24 in which the intermediate cooked sheets are cooked in an hot air convection oven, for example an impingement oven, to produce a cooked snack food sheet that has a moisture content of from greater than 5 to up to 12 wt% based on the weight of the cooked snack food sheet. Typically, the hot air convection cooking is carried out at an oven temperature of from 120 to 180°C for a period of from 1 to 5 minutes, optionally about 3 minutes, and when an impingement oven is used the air speed is typically from 5-15 m/s.

Finally, in a dehydrating step 26 the cooked snack food sheet is dehydrated to reduce the moisture content of the resultant cooked product to within the range of from 0.5 to 5 wt%, preferably from 0.5 to 2 wt%, based on the weight of the dehydrated cooked snack food sheet. Typically, the dehydration is carried out at in a dehydrator at a dehydrator temperature of from 100 to 120°C for a period of from 6 to 15 minutes.

After the dehydrating step 26, the dehydrated cooked snack food sheet comprises a rigid starch matrix comprising potato starch and a plurality of individual pieces of vegetable and/or fruit randomly distributed throughout the matrix, wherein at least 50 % by number of the pieces have a minimum dimension of at least 0.75 mm and a maximum dimension of up to 7 mm. In some embodiments, at least 60 % by number of the pieces have a minimum dimension of at least 0.75 mm and a maximum dimension of up to 7 mm, for example, at least about 70 %, or at least about 80 %.

In some embodiments, the dehydrated cooked snack food sheet comprises a rigid starch matrix comprising potato starch and a plurality of individual pieces of vegetable and/or fruit randomly distributed throughout the matrix, wherein at least 50 % by number of the pieces have a minimum dimension of at least 1 mm and a maximum dimension of up to 6 mm. For example, at least 50 % by number of the pieces may have a minimum dimension of at least 2 mm and a maximum dimension of up to 5 mm.

In preferred embodiments of the snack food of the present invention, at least 90 % by number of the pieces have a minimum dimension of at least 1 mm, or at least 2 mm, preferably, at least about 95 % of the pieces have a minimum dimension of at least 1 mm, or at least 2 mm.

The dehydrated cooked snack food sheet is preferably in the form of a snack food chip and has a thickness of from 1 to 8 mm, optionally from 1 to 5 mm, further optionally from 1 to 3 mm, yet further optionally from 1 to 2 mm. The pieces comprise vegetable and/or fruit preferably comprising less than 33 wt% starch on a dry basis based on the weight of the vegetable and/or fruit pieces in the snack food.

In the foregoing description of the embodiments of the method of the present invention, a vegetable snack food is produced; however, alternatively or additionally the snack food may contain fruit instead of or in addition to the vegetable component(s). The same steps apply for fruit as described above for vegetable(s).

For the snack food chips of the embodiments of the present invention that contain vegetable and/or fruit, in each case the initial vegetable and/or fruit ingredient(s) include pieces which contain intact cellular wall material from the fresh vegetable and/or fruit material and the processing is carried out so that the dehydrated cooked snack food sheet still contains cellular wall material from the fresh vegetable and/or fruit ingredient(s) and the cellular wall material defines the morphology of the porous structure in the vegetable and/or fruit pieces present in the dehydrated cooked snack food sheet.

In addition to the initial vegetable and/or fruit pieces, additional vegetable and/or fruit material may be added in the form of one or more of a puree, juice, each in a fresh or concentrated form, or powder produced by a spray drying or freeze drying process.

The fruit material may include any edible fruit or combination of edible fruits. For example, the fruit material may be selected from melon, strawberry, raspberry, blackberry, blackcurrant, blueberry, cranberry, apple, pear, persimmon, plum, peach, apricot, orange, mandarin, lemon, grapefruit, lime, mango, cherry, pineapple, kiwi, fig, papaya, starfruit, pomegranate and grape or any mixture of two or more of these fruits. Different types of fruit can be selected to give variable fruit flavour impact.

Moisture is at least partly added via vegetable and/or fruit addition. In each case it may be necessary to provide the desired moisture content by adjusting the ingredient composition for moisture content.

Various other optional ingredients may be present, such as flavorings or additives to provide sensory properties, such as inclusions, or formulated or natural flavourings, for example to enhance vegetable and/or fruit flavour. For example, seeds may be added, as an example of a wide range of optional additional ingredients which can be added without changing the essential matrix structure or texture characteristics or manufacturing process as discussed herein, as would be apparent to those skilled in the art. It is preferred to eliminate any artificial additives, such as flavorings or colorants, from the ingredients to form the snack food.

The present inventors have discovered, surprisingly, that, the use of a hybrid cooking process, employing an initial microwave cooking step followed by an hot air convection cooking step, provides a unique texture in the final snack food product produced from the ingredient recipe comprising both mashed potato and vegetable and/or fruit pieces having the particular piece size as described above. In particular, the final non-fried snack food product has a bimodal relationship between the different respective pore size distributions of the fruit and/or vegetables pieces as compared to the starch-based matrix. This in turn provides a distinct bimodal mouthfeel as a result of the different respective pore size distributions of the fruit and/or vegetables pieces as compared to the starch-based matrix. There is also a bimodal aspect to the visual appearance of the final snack food product since the fruit and/or vegetables pieces are visually distinct from the starch-based matrix to the naked eye.

Without being bound by any theory, it is believed that the specific hybrid cooking process enables the formation of this bimodal pore size distribution, and associated mouthfeel and visual appeal, by the following mechanisms. During the dough forming process, the potato mash forms a coherent homogeneous dough containing a distribution of individual vegetable and/or fruit pieces which retain their cellular status from the original fresh whole vegetable and/or fruit. During the successive cooking steps of the hybrid cooking method, initially the microwave cooking causes a rapid increase in the temperature of the water within the cells of the vegetable and/or fruit, and at least a portion of that water within the cells rapidly boils off leaving the walls of the cellular material surrounding steam and/or voids corresponding to the morphology of the cellular material. Some of the steam escapes from the product, to reduce the moisture content of the vegetable and/or fruit pieces.

In addition, during the microwave cooking, water within the dough matrix is also boiled off to form bubbles of steam and/or voids to reduce the moisture content of the matrix. The dough matrix is, compared to the cellular material, more plastic during the microwave step, and the steam initates the formation of voids, with a large size distribution, leading to larger voids being formed in the matrix than in the cellular material and a larger size distribution in the matrix than in the cellular material. The result is that after the microwave cooking step the moisture content of the entire dough is reduced from 60 to 80 wt% to a value of from 25 to 45 wt%.

Thereafter, the hot air convenction cooking step cooks the dough, including the vegetable and/or fruit pieces and the dough matrix. The hot air convenction cooking step causes the starch in the dough matrix to become glassy thereby to form a rigid matrix. The remaining steam in the cellular material of the vegetable and/or fruit pieces and the bubbles/voids of the dough matrix is continued to be boiled off. The result is that after the hot air convection cooking step the moisture content of the product is reduced from 25 to 45 wt% to a value of from greater than 5 to up to 12 wt%.

The subsequent dehydration step continues to lower the moisture content from 5 to 12 wt% to a final value of from 0.5 to 5 wt%, but does not fundamentally change the microstructure of the product.

In the final snack food product, the voids in the final matrix that have been formed from bubbles of steam formed in the dough matrix are substantially non-spherical voids of a larger size, and a wider size distribution, than the voids present in the residual cellular material structure of the vegetable and/or fruit pieces. Therefore there is a bimodal void structure in the final product of the present invention, in which cell walls of the vegetable and/or fruit pieces have been retained around small voids with a small size distribution, which creates a unique texture.

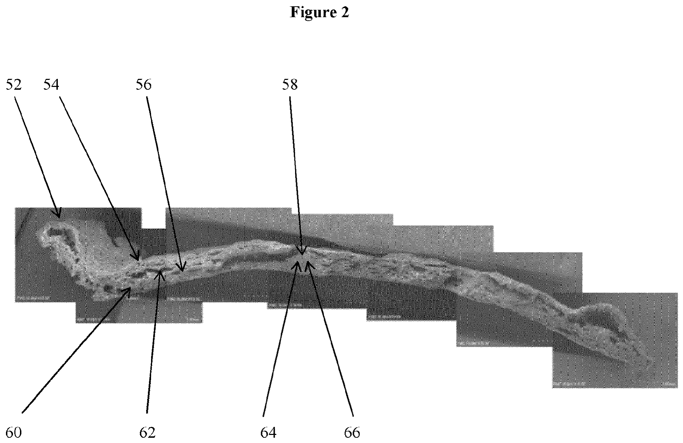

Referring to Figure 2, accordingly, one embodiment of the present invention provides a vegetable- and/or fruit-containing non-fried snack food 52. The snack food 52 comprises a sheet 54 having a thickness of from 1 to 8 mm. Typically, the sheet 54 is in the form of a snack food chip and has a thickness of from 1 to 5 mm, optionally from 1 to 3 mm, further optionally from 1 to 2 mm. A most typical snack chip has a thickness of about 1.5 mm.

The snack food 52 may have any desired regular or irregular shape in plan view, may have three-dimensional shaping, and may have any desired dimensions with respect to area and length/width dimensions.

The sheet 54 comprises a rigid starch matrix 56 comprising potato starch and a plurality of individual pieces 58 of non-potato vegetable and/or fruit randomly distributed throughout the matrix 56. At least 50 % by number of the pieces 58 have a minimum dimension of at least 0.75 mm and a maximum dimension of up to 7 mm. Preferably, at least 90 % by number of the pieces have a minimum dimension of at least 1 mm, or at least 2 mm. The pieces 58 are preferably individually visible to the human eye.

In the present invention, the starch in the rigid starch matrix 56 consists of 100 wt% potato starch, based on the total weight of the starch in the rigid starch matrix.

The rigid starch matrix 56 comprises a substantially homogeneous cooked mixture of the homogeneous dough composition, as described above with respect to the method.

In some preferred embodiments of the present invention, the pieces 58 comprise or consist of vegetable pieces and comprise at least one root vegetable, optionally selected from beetroot and carrot, and/or at least one allium vegetable, optionally selected from onion, garlic, shallot, chive and scallion, and/or at least one cucurbit vegetable, optionally selected from butternut squash, pumpkin, spaghetti squash, cucumber, or marrow. However, as described above other vegetable(s) can be used to provide the vegetable pieces and the resulting desired microstructure in the snack food product.

In other preferred embodiments of the present invention, the pieces 58 comprise or consist of fruit pieces, optionally selected from apple and pear. However, as described above other fruit(s) can be used to provide the fruit pieces and the resulting desired microstructure in the non-fried snack food product.

In preferred embodiments of the present invention, the non-fried snack food has a weight ratio of rigid starch matrix: pieces of vegetable and/or fruit of from 1:9 to 6: 1.

In preferred embodiments of the present invention, the non-fried snack food has a vegetable and/or fruit solids content from the pieces, on a dry basis, of from 2 to 50 wt% based on the weight of the snack food.

In preferred embodiments of the present invention, the moisture content of the non-fried snack food is from 0.5 to 5 wt%, optionally from 0.5 to 2 wt%, based on the weight of the snack food.

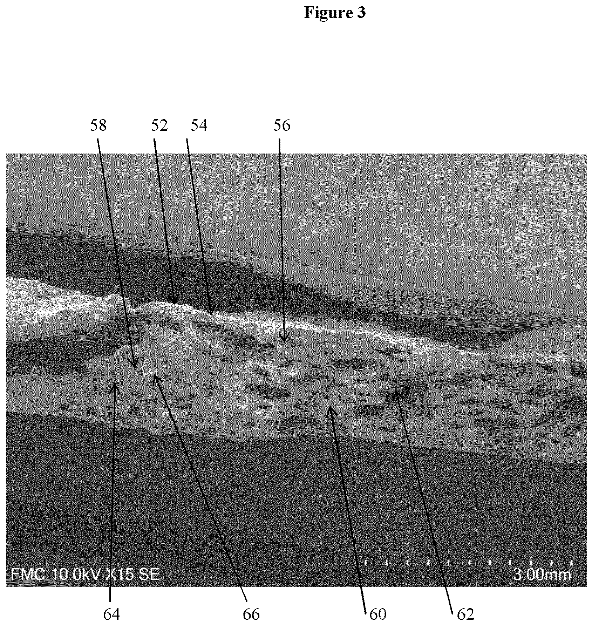

A typical image of the cross-section is shown in Figure 2. Figure 3 is an enlarged view of part of the cross-section of Figure 2.

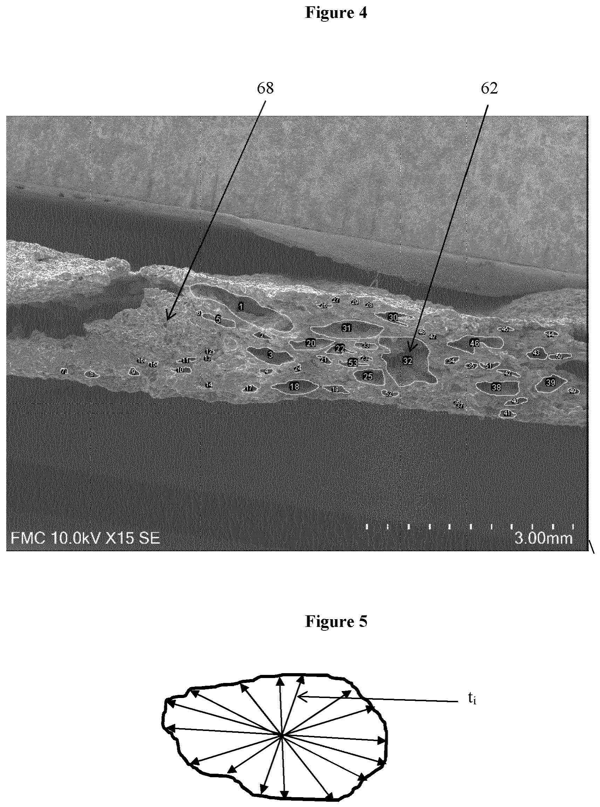

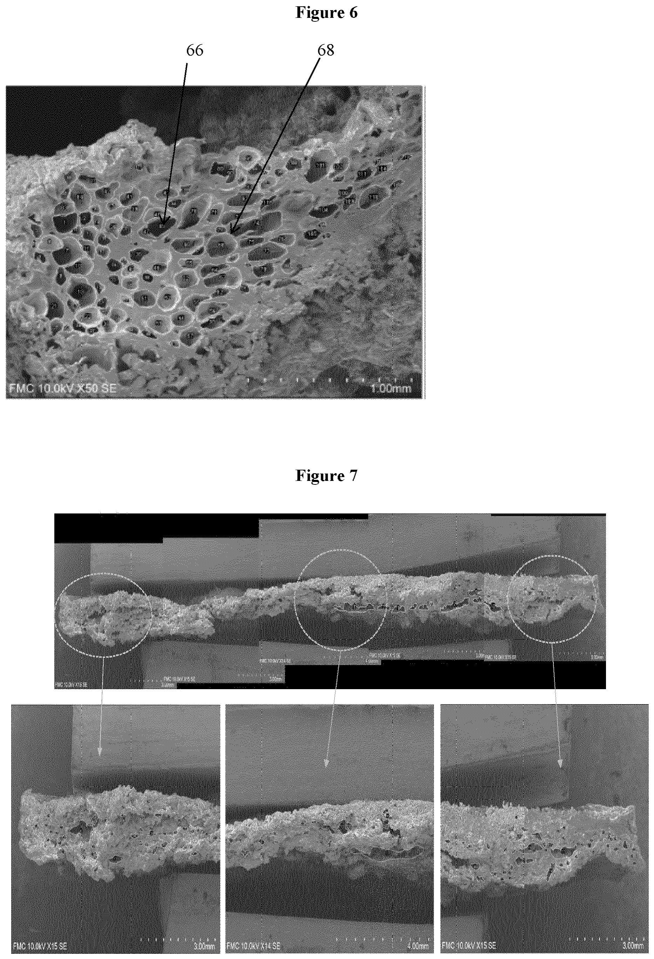

Using imaging and analysis software, available for example from CellMat Cellular Materials Laboratory, Valladolid, Spain, selected regions of the cross-section are imaged and the pore shape and dimensions are identified. As shown in Figure 4, a region of the starch matrix is selected and then the software identifies pores in the matrix. As shown in Figure 6, a region of the vegetable/fruit pieces is selected and then the software identifies pores in the vegetable/fruit pieces. The pores are then measured and various parameters calculated. The pores are highlighted in Figures 4 and 6.

The matrix 56 defines therein a first cellular structure 60 of first cellular pores 62 having a first pore size distribution and the pieces 58 define therein a second cellular structure 64 of second cellular pores 66 having a second pore size distribution. At least some of the second cellular pores 66 are defined by polysaccharide cell walls 68 of the respective vegetable and/or fruit.

The microstructure of the non-fried snack food product of the present invention is analysed and characterised by using microscopy and calculations as described below.

In the analysis, snack food products in the form of sheets, for example chips, are fractured through the sheet thickness at a statistically significant number of locations over the surface area of the chip to reveal the internal microstructure in cross-section. The cross-section is analysed using microscopy, preferably scanning electron microscopy (SEM), although light microscopy may alternatively be used.

Figures 3 to 5 clearly show the bimodal microstructure of the first cellular structure 60 of matrix 56 and the second cellular structure 64 of the pieces 58.

As shown in Figure 5, a given cellular pore is measured to determine the cellular pore size dimension by taking a statistically significant number of measurements of the distance between opposite edges of the cellular pore extending through a central point, i.e. the width of the cellular pore. For example, there may be eight measurements of the width $t_i$ of the cellular pore as shown in Figure 5. Referring to Figure 5, for any given cellular pore the size $\Phi$ of the cellular pore is preferably calculated as an average value of the width $t_i$ of the cellular pores, and therefore in this embodiment is calculated as:

$$\Phi i = \Sigma_1^8 \, t_i/8.$$

The cellular pore size for the respective first cellular structure 60 of matrix 56 or the second cellular structure 64 of the pieces 58 is calculated as an average cellular pore size $\Phi_{2D}$ for a statistically significant number of cellular pores, i.e. n pores, taken as a two-dimensional value from two-dimensional measurements of cellular pores in the cross-section.

Therefore in this embodiment the cellular pore size, expressed as a two-dimensional area, for the respective first or second cellular structure is calculated as:

$$\Phi_{2D} = \Sigma_{i=1}^{n} \Phi_i/n.$$

The three-dimensional value of the cellular pore size, i.e. the volume, for the respective first or second cellular structure is calculated in this embodiment by applying a normalized correction factor of 1.273 to the two-dimensional cellular pore size, and therefore as:

$$\Phi_{3D} = 1.273 \ \Phi_{2D}.$$

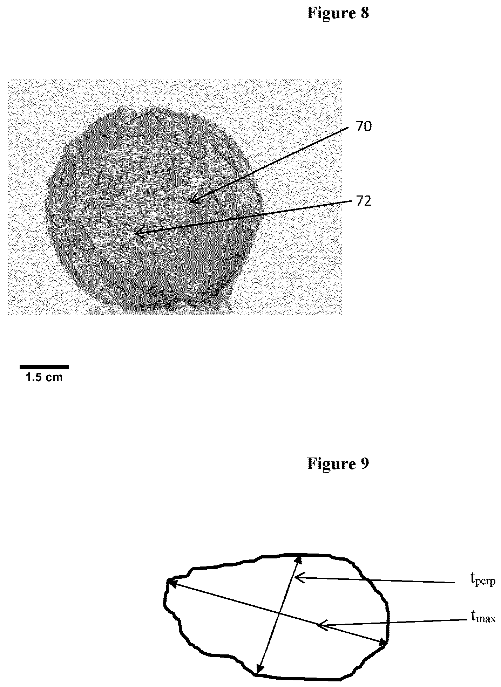

In this embodiment, the major surface, for example the upper or lower surface of a chip product, of a statistically significant number of snack food products is imaged by X-rays and a typical resultant image is shown in Figure 8.

The X-ray image distinguishes between the starch matrix 70 and the vegetable/fruit pieces 72. The regions of the starch matrix 70 and the vegetable/fruit pieces 72 are separated by imaging analysis software and vegetable/fruit pieces 72 are identified and then the surface area of the vegetable/fruit pieces 72 is measured.

The volume fraction $V_f$ of the vegetable/fruit pieces relative to the total volume of the snack food is estimated using the following calculation:

$$V_f = A_v/A_s$$

where $A_v$ is the cumulative area of the vegetable/fruit pieces and $A_s$ is the total area of the snack food.

Although the volume fraction $V_f$ is calculated based on area values, it is considered to be sufficiently accurate estimate of the volume ratio in the snack food between the volume of the vegetable/fruit pieces and the total volume of the snack food.

The density of the cellular pores, expressed as the number of cellular pores per unit area $N_v$, for the respective first or second cellular structure is calculated by counting the number of pores in a selected area of the micrograph or X-ray scan, the area being sufficiently large so that at least 100 of the respective cellular pores are present in the measured area.

The anisotropy ratio R of the cellular pores is also calculated. As described above, for a given cellular pore a number of values of the width $t_i$ are measured, and from these values a maximum value of the width, $t_{max}$, may be derived.

For any given cellular pore, the anisotropy ratio $R_i$ is calculated from the maximum width value $t_{max}$ and a value $t_{perp}$ of the width that is perpendicular to the maximum width, as shown in Figure 9.

The anisotropy ratio for any given cellular pore is calculated as follows:

$$Ri = t_{max}/ t_{perp}.$$

The anisotropy ratio $R_{max}$ of the respective first cellular structure 60 of matrix 56 or the second cellular structure 64 of the pieces 58 is calculated as an average anisotropy ratio $R_i$ for a statistically significant number of cellular pores, i.e. n pores, taken as a two-dimensional value from two-dimensional measurements of cellular pores in the cross-section. Therefore in this embodiment the anisotropy ratio $R_{max}$ of the cellular pore size for the respective first or second cellular structures is calculated as:

$$R_{max} = \Sigma_{i=1}^{n} R_i/n.$$

For the analysis of the distribution of the size of the cellular pores, of the respective first cellular structure 60 of matrix 56 or the second cellular structure 64 of the pieces 58, the standard deviation SD is calculated as:

$$SD = \sqrt{((\Sigma_{i=1}^{n} (\Phi_i - \Phi)^2)/n\text{-}1)}$$

where $\Phi i$ is the size of each single cellular pore and $\Phi$ is the average (by number) cellular pore size of the distribution.

The normalized standard deviation NSD is calculated as:

$$NSD = SD/ \Phi$$

where $\Phi$ is the average (by number) cellular pore size of the distribution.

In accordance with the present invention, the first pore size distribution has a larger number-average pore size, and a wider size distribution, than the second pore size distribution.

In preferred embodiments of the present invention, the first pore size distribution has a number-average pore size $\Phi_{2D}$ within the range of from 100 to 300 $\mu$m, preferably with a normalised standard deviation NSD of from 0.75 to 2, and the second pore size distribution has a number-average pore size $\Phi_{2D}$ within the range of from 20 to 90 $\mu$m, preferably with a normalised standard deviation NSD of from 0.25 to 0.9.

Optionally, the first pore size distribution has a number-average pore size $\Phi_{2D}$ within the range of from 120 to 250 $\mu$m, preferably with a normalised standard deviation NSD of from 0.85 to 1.75 and the second pore size distribution has a number-average pore size $\Phi_{2D}$ within the range of from 25 to 75 $\mu$m, preferably with a normalised standard deviation NSD of from 0.3 to 0.75. The number-average pore size $\Phi_{2D}$ and the normalised standard deviation NSD are calculated as described above.

In preferred embodiments of the present invention, the first pore size distribution has a number-average pore size $\Phi_{3D}$ within the range of from 150 to 375 $\mu$m and the second pore size distribution has a number-average pore size $\Phi_{3D}$ within the range of from 25 to 100 $\mu$m. Optionally, the first pore size distribution has a number-average pore size $\Phi_{3D}$ within the range of from 150 to 300 $\mu$m and the second pore size distribution has a number-average pore size $\Phi_{3D}$ within the range of from 25 to 75 $\mu$m. The number-average pore size $\Phi_{3D}$ is calculated as described above.

In preferred embodiments of the present invention, the first pore size distribution has a smaller number of pores per unit area $N_v$ than the second pore size distribution. Optionally, the first pore size distribution has from 250 to 2000 pores per unit area $N_v$ and the second pore size distribution has from $2.5 \times 10^3$ to $1 \times 10^5$ pores per unit area $N_v$. Further optionally, the first pore size distribution has from 450 to 1250 pores per unit area $N_v$ and the second pore size distribution has from $2.5 \times 10^3$ to $5 \times 10^4$ pores per unit area $N_v$. The number of pores per unit area $N_v$ is calculated as described above.

In preferred embodiments of the present invention, the first cellular pores have a number-average anisotropy ratio $R_{max}$ which is greater than a number-average anisotropy ratio of the second cellular pores. Optionally, the first cellular pores have a number-average anisotropy ratio $R_{max}$ of from 2 to 2.75 and the second cellular pores have a number-average anisotropy ratio $R_{max}$ of from 1.25 to 1.95. Further optionally, the first cellular pores have a number-average anisotropy ratio $R_{max}$ of from 2.1 to 2.6 and the second cellular pores have a number-average anisotropy ratio $R_{max}$ of from 1.35 to 1.90. The number-average anisotropy ratio $R_{max}$ is calculated as described above.

In the preferred embodiments, the non-fried snack food product has a crisp structure, typically associated with snack food chips, in which the potato starch-based matrix has an aerated structure comprising the cellular voids that is light and crispy, and this texture is contrasted by the vegetable/fruit pieces, which have a higher number density of more uniform smaller cellular voids, which impart a discernibly different individual texture and mouth feel to the snack food product and are also visible to the naked eye.

The present invention will now be described in greater detail with reference to the following non-limiting Examples.

Example 1 (not in accordance with the invention)

A non-fried snack food in the form of a beetroot and chickpea chip was produced using the flow chart of Figure 1. The ingredient recipe is listed in Table 1. The vegetable piece ingredients and the dough matrix ingredients as listed in Table 1 were processed as described above to produce snack food chips.

In Example 1, the vegetable pieces were provided by beetroot pieces that were randomly distributed throughout the dough matrix comprising potato mash. The dough matrix also comprised rheology modifiers in the form of potato flakes and chickpea flour, and the oil also acted as a rheology modifier to assist sheeting the dough. The dough matrix further comprised herbs and spices and other flavorings. The resultant snack food product was formed as circular chips as shown in Figure 8.

The chips were analysed as describe above to determine various parameters as summarised in Table 2.

Table 1

| Vegetable/fruit Piece Ingredients | Example 1 (wt%) | Example 2 (wt%) | Example 3 (wt%) |
|---|---|---|---|
| Beetroot | 59.26 | 0 | 39 |
| Parsnip shred | 0 | 28 | 0 |
| Carrot shred | 0 | 27 | 0 |
| Onion shred | 0 | 9 | 0 |
| Apple | 0 | 0 | 25 |

(continued)

| Dough Matrix Ingredients | | | |
|---|---|---|---|
| Potato mash | 22 | 23.7 | 25 |
| Potato flake | 5 | 6.5 | 3 |
| Chickpea flour | 6.5 | 0 | 6 |
| Beetroot powder | 4 | 0 | 0 |
| High oleic sunflower oil | 3 | 3.0 | 2 |
| Onion granules | 0.15 | 0.47 | 0 |
| Onion powder | 0 | 2.0 | 0 |
| Garlic powder | 0.08 | 0.29 | 0 |
| Black pepper | 0.01 | 0.04 | 0 |

Table 2

| Matrix Properties | Example 1 | Example 2 | Example 3 | Comparative Example 1 |
|---|---|---|---|---|
| $\Phi_{2D}$ ($\mu$m) | 123.8 | 132.2 | 124.30 | 98.63 |
| SD | 115.4 | 114.6 | 124.1 | 64.3 |
| NSD | 0.93 | 0.87 | 1.00 | 0.65 |
| $\Phi_{3D}$ ($\mu$m) | 157.5 | 168.3 | 158.24 | 125.56 |
| $N_v$ (cells/cm$^2$) | 529 | 856 | 590 | 417 |
| $R_{max}$ | 2.40 | 2.58 | 2.43 | 1.73 |
| Vegetable Piece Properties | | | | |
| $\Phi_{2D}$ ($\mu$m) | 37.6 | 57.8 | 71.64 | 27.18 |
| SD | 31.2 | 38.3 | 37.5 | 11.3 |
| NSD | 0.83 | 0.66 | 0.52 | 0.41 |
| $\Phi_{3D}$ ($\mu$m) | 47.8 | 73.6 | 91.19 | 34.61 |
| $N_v$ (cells/cm$^2$) | $2.3 \times 10^4$ | $1.2 \times 10^4$ | $5.7 \times 10^3$ | $6.34 \times 10^4$ |
| $R_{max}$ | 1.79 | 1.84 | 1.93 | 1.55 |

The final dehydrated and cooked chip was crispy and had a beetroot coloured starch matrix containing a random distribution of beetroot pieces. The beetroot pieces were visible to the naked eye and could be individually discerned within the mouthfeel of the product.

It may be seen from the measured parameters of Table 2 that the product exhibited a bimodal distribution with regards to the cellular pores in, on the one hand, the potato starch-containing starch matrix and, on the other hand, the beetroot vegetable pieces.

The cellular pore size parameters $\Phi_{2D}$ and $\Phi_{3D}$ were significantly larger for the potato starch-containing starch matrix than for the beetroot pieces. In addition, the cellular pore size $\Phi_{2D}$ had a larger distribution, represented by a larger standard deviation SD and a larger normalized standard deviation NSD, for the potato starch-containing starch matrix than for the beetroot pieces.

The number of cellular pores per unit area, $N_v$, was larger for the beetroot pieces than for the potato starch-containing starch matrix.

Finally, the anisotropy ratio $R_{max}$ was larger for the potato starch-containing starch matrix than for the beetroot pieces.

Figures 2-4 show the beetroot and chickpea chip of Example 1.

Example 2

A non-fried snack food in the form of a root vegetable chip comprising parsnip and carrot as root vegetables, and also onion, thereby to make a snack food with the primary ingredients of potato, parsnip, carrot and onion to provide a "root vegetable rosti" chip, was produced in accordance with the present invention using the flow chart of Figure 1. The ingredient recipe is listed in Table 1. The vegetable piece ingredients and the dough matrix ingredients as listed in Table 1 were processed as described above with respect to the method of the present invention to produce snack food chips.

In Example 2, the vegetable pieces were provided by parsnip, carrot and onion pieces that were randomly distributed throughout the dough matrix comprising potato mash. The dough matrix also comprised rheology modifiers in the form of potato flakes, and the oil also acted as a rheology modifier to assist sheeting the dough. The dough matrix further comprised herbs and spices and other flavorings. The resultant snack food product was formed as circular chips as shown in Figure 8.

The chips were analysed as describe above to determine various parameters as summarised in Table 2.

The final dehydrated and cooked chip was crispy and had a cooked potato, i.e. orange/yellow, coloured starch matrix containing a random distribution of parsnip, carrot and onion pieces. The parsnip, carrot and onion pieces were visible to the naked eye and could be individually discerned within the mouthfeel of the product.

It may be seen from the measured parameters of Table 2 that, as for Example 1, the product exhibited a bimodal distribution with regard to the cellular pores in, on the one hand, the potato starch-containing starch matrix and, on the other hand, the parsnip, carrot and onion vegetable pieces.

The cellular pore size parameters $\Phi_{2D}$ and $\Phi_{3D}$ were significantly larger for the potato starch-containing starch matrix than for the vegetable pieces. In addition, the cellular pore size $\Phi_{2D}$ had a larger distribution, represented by a larger standard deviation SD and a larger normalized standard deviation NSD, for the potato starch-containing starch matrix than for the vegetable pieces.

The number of cellular pores per unit area, $N_v$, was larger for the vegetable pieces than for the potato starch-containing starch matrix.

Finally, the anisotropy ratio $R_{max}$ was larger for the potato starch-containing starch matrix than for the vegetable pieces.

Figures 8 shows the carrot, parsnip and onion chip of Example 2.

Example 3 (not in accordance with the invention)

A non-fried snack food in the form of a beetroot and apple vegetable and fruit chip was produced using the flow chart of Figure 1. The ingredient recipe is listed in Table 1. The vegetable piece ingredients and the dough matrix ingredients as listed in Table 1 were processed as described above to produce snack food chips.

In Example 3, vegetable pieces were provided by beetroot and fruit pieces were provided by apple, and these pieces that were randomly distributed throughout the dough matrix comprising potato mash. The dough matrix also comprised rheology modifiers in the form of potato flakes, and the oil also acted as a rheology modifier to assist sheeting the dough. The resultant snack food product was formed as circular chips as shown in Figure 8.

The chips were analysed as describe above to determine various parameters as summarised in Table 2.

The final dehydrated and cooked chip was crispy and had a beetroot coloured starch matrix containing a random distribution of beetroot and apple pieces. The beetroot and apple were visible to the naked eye and could be individually discerned within the mouthfeel of the product.

It may be seen from the measured parameters of Table 2 that, as for Examples 1 and 2, the product exhibited a bimodal distribution with regard to the cellular pores in, on the one hand, the potato starch-containing starch matrix and, on the other hand, the beetroot and apple vegetable and fruit pieces.

The cellular pore size parameters $\Phi_{2D}$ and $\Phi_{3D}$ were significantly larger for the potato starch-containing starch matrix than for the vegetable/fruit pieces. In addition, the cellular pore size $\Phi_{2D}$ had a larger distribution, represented by a larger standard deviation SD and a larger normalized standard deviation NSD, for the potato starch-containing starch matrix than for the vegetable/fruit pieces.

The number of cellular pores per unit area, $N_v$, was larger for the vegetable/fruit pieces than for the potato starch-containing starch matrix.

Finally, the anisotropy ratio $R_{max}$ was larger for the potato starch-containing starch matrix than for the vegetable/-fruit pieces.

Figures 6 and 7 show the apple and beetroot product of Example 3.

Example 4

A non-fried snack food in the form of a pea and chilli chip was produced in accordance with the present invention using the flow chart of Figure 1. The ingredient recipe is listed in Table 3. The vegetable piece ingredients and the dough matrix ingredients as listed in Table 3 were processed as described above with respect to the method of the present invention to produce snack food chips.

Table 3

| Ingredients | % |
|---|---|
| Potato Mash | 37.5 |
| Peas | 45.5 |
| Ginger | 2 |
| Coriander | 1.76 |
| Red Chilli | 1.6 |
| Potato flake | 5 |
| HOSO | 1.5 |
| Mixed Flavourings | 5.14 |

In Example 4, the vegetable pieces were provided by peas, red chili, coriander and ginger pieces that were randomly distributed throughout the dough matrix comprising potato mash. The dough matrix also comprised rheology modifiers in the form of potato flakes, and the oil also acted as a rheology modifier to assist sheeting the dough. The dough matrix further comprised herbs and spices and other flavorings. The resultant snack food product was formed as circular chips as shown in Figure 8.

The chips were analysed as describe above to determine various parameters as summarised in Table 4.

Table 4

| Matrix Properties | Example 4 |
|---|---|
| $\Phi_{2D}$ ($\mu$m) | 154.00 |
| SD | 90.0 |
| NSD | 0.58 |
| $\Phi_{3D}$ ($\mu$m) | 196.04 |
| $R_{max}$ | 2.82 |
| **Vegetable Piece Properties** | |
| $\Phi_{2D}$ ($\mu$m) | 28.99 |
| SD | 13.6 |
| NSD | 0.47 |
| $\Phi_{3D}$ ($\mu$m) | 36.91 |
| $R_{max}$ | 1.71 |

The final dehydrated and cooked chip was crispy and had a green coloured starch matrix containing a random distribution of pea, ginger, coriander and chilli pieces. The pea, coriander and chilli pieces were visible to the naked eye and could be individually discerned within the mouthfeel of the product.

It may be seen from the measured parameters of Table 4 that, as for Example 1, the product exhibited a bimodal distribution with regard to the cellular pores in, on the one hand, the potato starch-containing starch matrix and, on the other hand, the vegetable pieces.

The cellular pore size parameters $\Phi_{2D}$ and $\Phi_{3D}$ were significantly larger for the potato starch-containing starch matrix than for the vegetable pieces. In addition, the cellular pore size $\Phi_{2D}$ had a larger distribution, represented by a larger standard deviation SD and a larger normalized standard deviation NSD, for the potato starch-containing starch matrix than for the vegetable pieces.

Finally, the anisotropy ratio $R_{max}$ was larger for the potato starch-containing starch matrix than for the vegetable pieces.

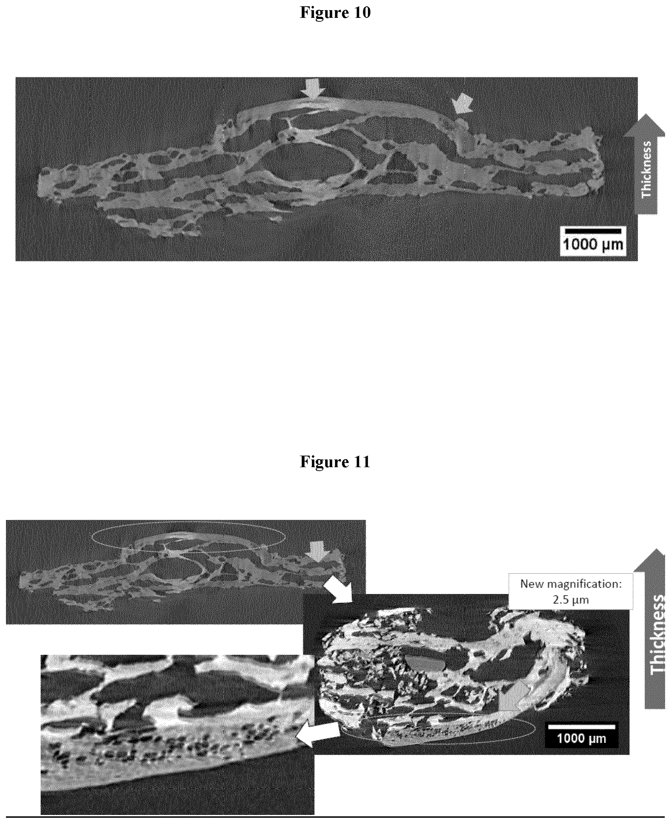

Figures 9 and 10 show the pea and chilli chip of Example 4.

Example 5

A non-fried snack food in the form of an asparagus and pea chip was produced in accordance with the present invention using the flow chart of Figure 1. The ingredient recipe is listed in Table 5. The vegetable piece ingredients and the dough matrix ingredients as listed in Table 5 were processed as described above with respect to the method of the present invention to produce snack food chips.

Table 5

| Ingredients | % |
|---|---|
| Potato Mashed | 29.42 |
| Pea Mashed | 25.5 |
| Asparagus Mashed | 24.5 |
| Potato Flake | 4.50 |
| Mixed flavourings | 16.08 |

In Example 5, the vegetable pieces were provided by pea and asparagus pieces that were randomly distributed throughout the dough matrix comprising potato mash. The dough matrix also comprised rheology modifiers in the form of potato flakes, and oils in the mixed flavourings also acted as a rheology modifiers to assist sheeting the dough. The dough matrix further comprised herbs and spices and other flavorings. The resultant snack food product was formed as circular chips as shown in Figure 8.

The chips were analysed as described above to determine various parameters as summarised in Table 6.

Table 6

| Matrix Properties | Example 4 |
|---|---|
| $\Phi_{2D}$ ($\mu$m) | 73.2 |
| SD | 29.5 |
| NSD | 0.40 |
| $\Phi_{3D}$ ($\mu$m) | 93.3 |
| Ry/x | 0.65 |
| **Asparagus Piece Properties** | |
| $\Phi_{2D}$ ($\mu$m) | 37.7 |
| SD | 12.5 |
| NSD | 0.33 |
| $\Phi_{3D}$ ($\mu$m) | 47.9 |
| Ry/x | 0.97 |

The final dehydrated and cooked chip was crispy and had a green coloured starch matrix containing a random distribution of pea and asparagus pieces. The pea and asparagus pieces were visible to the naked eye and could be individually discerned within the mouthfeel of the product.

It may be seen from the measured parameters of Table 6 that, as for Example 1, the product exhibited a bimodal distribution with regard to the cellular pores in, on the one hand, the potato starch-containing starch matrix and, on the other hand, the vegetable pieces.

The cellular pore size parameters $\Phi_{2D}$ and $\Phi_{3D}$ were significantly larger for the potato starch-containing starch matrix than for the vegetable pieces. In addition, the cellular pore size $\Phi_{2D}$ had a larger distribution, represented by a larger standard deviation SD and a larger normalized standard deviation NSD, for the potato starch-containing starch matrix than for the vegetable pieces.

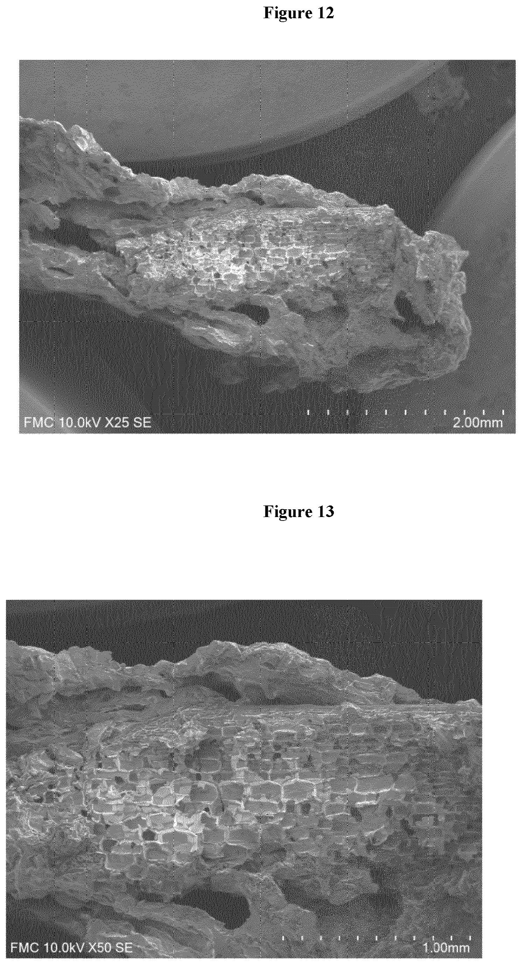

Figures 12-14 show the pea and asparagus product of Example 5.

Comparative Example 1

A known commercially available vegetable-containing snack food, which comprised a beetroot chip, was tested using analyses similar to those carried out on Examples 1 to 3.

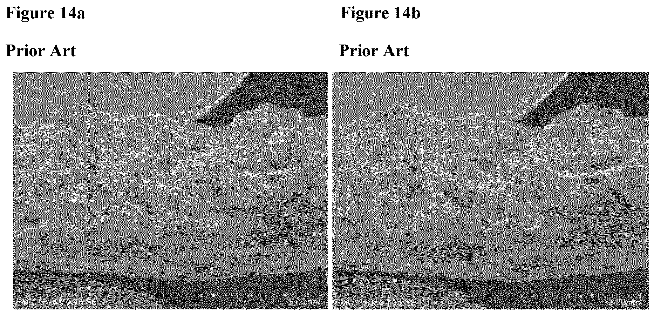

Figures 14a and 14b show a cross-section, taken by scanning electron microscopy (SEM), through the known vegetable-containing snack food which is sold by Innate Food of Bristol, UK under the trade name "Beetroot Squares". Figure 14a shows the matrix pores highlighted by the analytical software, whereas Figure 14b shows an unhighlighted image.

The Innate Beetroot Squares comprise the following ingredients: Beetroot (40.5 wt%), onion, red capsicum, almonds, coconut, garlic, sea salt, turmeric, black pepper, turmeric, herbs & spices.

It may be seen that the composition comprises low starch content.

The cross-section of Figures 14a and 14b shows a substantially uniform microstructure with a dense matrix substantially throughout the entire chip. Any pores are small and generally rather uniform in size and distribution throughout the chip. There are only a few pores distributed in the matrix, as highlighted in Figure 14a.

Although, as the data shows in Table 2, there is a bimodal cellular pore distribution, there is no starch-based matrix, and so the chip has an entirely different mouthfeel for the products of the present invention and do not exhibit a light aerated crisp texture for the matrix resulting in a bimodal mouthfeel and visual appearance.

## Claims

1. A non-fried vegetable- and/or fruit-containing snack food, the non-fried snack food comprising a sheet having a thickness of from 1 to 8 mm, the sheet comprising a rigid starch matrix comprising potato starch and a plurality of individual pieces of vegetable and/or fruit randomly distributed throughout the matrix, wherein at least 50 % by number of the pieces have a minimum dimension of at least 0.75 mm and a maximum dimension of up to 7 mm, wherein the matrix defines therein a first cellular structure of first cellular pores having a first pore size distribution and the pieces define therein a second cellular structure of second cellular pores having a second pore size distribution, at least some of the second cellular pores are defined by polysaccharide cell walls of the respective vegetable and/or fruit, and the first pore size distribution has a larger number-average pore size and a wider distribution than the second pore size distribution, wherein starch in the rigid starch matrix consists of 100 wt% potato starch based on the total weight of the starch in the rigid starch matrix, and wherein the non-fried snack food has a vegetable and/or fruit solids content from the pieces, on a dry basis, of from 10 to 30 wt% based on the weight of the non-fried snack food.

2. A non-fried snack food according to claim 1, wherein the first pore size distribution has a number-average pore size $\Phi_{2D}$ within the range of from 100 to 300 $\mu$m, preferably from 120 to 250 $\mu$m, with a normalised standard deviation of from 0.75 to 2, preferably from 0.85 to 1.75, and the second pore size distribution has a number-average pore size $\Phi_{2D}$ within the range of from 20 to 90 $\mu$m, preferably from 25 to 75 $\mu$m with a normalised standard deviation of from 0.25 to 0.9, preferably from 0.3 to 0.75.

3. A non-fried snack food according to claim 1 or claim 2, wherein the first pore size distribution has a number-average pore size $\Phi_{3D}$ within the range of from 150 to 375 $\mu$m, preferably from 150 to 300 $\mu$m, and the second pore size distribution has a number-average pore size $\Phi_{3D}$ within the range of from 25 to 100 $\mu$m, preferably from 25 to 75 $\mu$m.

4. A non-fried snack food according to any one of claims 1 to 3, wherein the first pore size distribution has a smaller number of pores per unit area $N_v$ than the second pore size distribution, optionally wherein the first pore size distribution has from 250 to 2000, preferably 450 to 1250, pores per unit area $N_v$ and the second pore size distribution has from $2.5 \times 10^3$ to $1 \times 10^5$, preferably $2.5 \times 10^3$ to $5 \times 10^4$, pores per unit area $N_v$.

5. A non-fried snack food according to any one of claims 1 to 4, wherein the first cellular pores have a number-average anisotropy ratio $R_{max}$ which is greater than a number-average anisotropy ratio of the second cellular pores, optionally wherein the first cellular pores have a number-average anisotropy ratio $R_{max}$ of from 2 to 2.75, preferably from 2.1 to 2.6, and the second cellular pores have a number-average anisotropy ratio $R_{max}$ of from 1.25 to 1.95, preferably from 1.35 to 1.90.

6. A non-fried snack food according to any one of claims 1 to 5, wherein:

   (a) at least 90 % by number of the pieces have a minimum dimension of at least 1 mm, or at least 2 mm; and/or
   (b) the pieces comprise or consist of vegetable pieces and comprise at least one root vegetable, optionally selected from beetroot and carrot, and/or at least one allium vegetable, optionally selected from onion, garlic, shallot, chive and scallion, and/or at least one cucurbit vegetable, optionally selected from butternut squash, pumpkin, spaghetti squash, cucumber, or marrow; and/or

(c) the pieces comprise or consist of fruit pieces, optionally selected from apple and pear; and/or

(d) (i) the pieces comprise vegetable and/or fruit comprising less than 33 wt% starch on a dry basis based on the weight of the vegetable and/or fruit pieces in the non-fried snack food, and/or (ii) the vegetable and/or fruit pieces are comprised of one or more vegetables and/or fruits that in the raw state have a starch content of no more than 5 wt% and a water content of at least 85 wt%, each wt% being based up the total weight of the respective raw vegetable(s) and/or fruit(s).

7. A non-fried snack food according to any one of claims 1 to 6, wherein:

(a) the non-fried snack food has a weight ratio of rigid starch matrix: pieces of vegetable and/or fruit of from 1:9 to 6:1; and/or

(b) the moisture content of the non-fried snack food is from 0.5 to 5 wt% based on the weight of the non-fried snack food; and/or

(c) the sheet is in the form of a snack food chip and has a thickness of from 1 to 5 mm, optionally from 1 to 3 mm, further optionally from 1 to 2 mm.

8. A method of manufacturing a vegetable-and/or fruit-containing non-fried snack food according to any one of claims 1-7, the method comprising the steps of:

a. providing a mash comprising mashed potato that has been at least partly cooked, wherein the mashed potato has been produced using fresh potato, dehydrated potato or any combination thereof;

b. providing a plurality of pieces of at least one fresh or frozen non-potato vegetable and/or fruit ingredient that is raw or has been at least partly cooked, wherein at least 50 % by number of the pieces have a minimum dimension of at least 0.75 mm and a maximum dimension of up to 7 mm;

c. mixing together the mash and the pieces of the at least one vegetable and/or fruit ingredient to form a dough mixture that has a moisture content of from 60 to 80 wt% based on the weight of the dough;

d. forming the dough mixture, by die cutting, into a plurality of individual sheets having a thickness of from 1 to 8 mm;

e. microwave cooking each sheet to produce an intermediate cooked sheet that has a moisture content of from 25 to 45 wt% based on the weight of the intermediate cooked sheet;

f. cooking the intermediate cooked sheet in a hot air convection oven to produce a cooked snack food sheet that has a moisture content of from greater than 5 to up to 12 wt% based on the weight of the cooked snack food sheet; and

g. dehydrating the cooked snack food sheet to reduce the moisture content of the resultant cooked product to within the range of from 0.5 to 5 wt% based on the weight of the dehydrated cooked snack food sheet, wherein the dehydrated cooked snack food sheet comprises a rigid starch matrix and a plurality of individual pieces of vegetable and/or fruit randomly distributed throughout the matrix, wherein at least 50 % by number of the pieces have a minimum dimension of at least 0.75 mm and a maximum dimension of up to 7 mm'

wherein starch in the rigid starch matrix consists of 100 wt% potato starch based on the total weight of the starch in the rigid starch matrix, and wherein the non-fried snack food has a vegetable and/or fruit solids content from the pieces, on a dry basis, of from 10 to 30 wt% based on the weight of the non-fried snack food.

9. A method according to claim 8, wherein:

(a) the mashed potato provided in step a is previously steam cooked at a temperature of at least 80°C for a period of from 5 to 30 minutes, optionally from 10 to 20 minutes; and/or

(b) the at least one vegetable and/or fruit ingredient provided in step b is previously steam cooked at a temperature of at least 100°C for a period of from 5 to 15 minutes, optionally from 5 to 10 minutes.

10. A method according to claim 8 or claim 9, wherein:

(a) the pieces provided in step b are produced by at least partly cooking fresh or frozen vegetable and/or fruit and subsequently comminuting the at least partly cooked vegetable and/or fruit to form the pieces; and/or

(b) the pieces provided in step b are raw vegetable and/or fruit and are comminuted to form the vegetable and/or fruit pieces.

11. A method according to any one of claims 8 to 10, wherein:

>(a) in step e the microwave cooking is carried out at a power density of from 15-25kW/kg of the dough sheets for a period of from 30 to 150 seconds, optionally from 50 to 100 seconds; and/or
>(b) in step f the hot air convection cooking is carried out at an oven temperature of from 120 to 180°C for a period of from 1 to 5 minutes, optionally about 3 minutes; and/or
>(c) in step g the dehydration is carried out at in a dehydrator at a dehydrator temperature of from 100 to 120°C for a period of from 6 to 15 minutes.

12. A method according to any one of claims 8 to 11, wherein in the dehydrated cooked snack food sheet at least 90 % by number of the pieces have a minimum dimension of at least 1 mm, or at least 2 mm.

13. A method according to any one of claims 8 to 12, wherein:

>(a) the vegetable and/or fruit pieces provided in step b are comprised of one or more vegetables and/or fruits that have a starch content of no more than 5 wt% and a water content of at least 85 wt%, each wt% being based up the total weight of the respective raw vegetable(s) and/or fruit(s); and/or
>(b) the pieces comprise or consist of vegetable pieces and comprise at least one root vegetable, optionally selected from beetroot and carrot, and/or at least one allium vegetable, optionally selected from onion, garlic, shallot, chive and scallion, and/or at least one cucurbit vegetable, optionally selected from butternut squash, pumpkin, spaghetti squash, cucumber, or marrow; and/or
>(c) the pieces comprise or consist of fruit pieces, optionally selected from apple and pear.

14. A method according to any one of claims 8 to 13, wherein:

>(a) the dehydrated cooked snack food sheet has a weight ratio of rigid starch matrix: pieces of vegetable and/or fruit of from 1:9 to 6: 1; and/or
>(b) the moisture content of the dehydrated cooked snack food sheet is from 0.5 to 2 wt% based on the weight of the dehydrated cooked snack food sheet; and/or
>(c) the dehydrated cooked snack food sheet is in the form of a snack food chip and has a thickness of from 1 to 5 mm, optionally from 1 to 3 mm, further optionally from 1 to 2 mm.

15. A method according to any one of claims 8 to 14, wherein the dough mixture formed in step c comprises the following ingredients based on the total weight of the dough mixture on a wet weight basis: 35-65 wt% vegetable(s) mashed, chopped and/or shredded; 20-50 wt% potato mash; 7-16 wt% dehydrated/dry ingredients; and 1-10 wt% herbs and spices.

**Patentansprüche**

1. Nicht frittiertes gemüse- und/oder obsthaltiges Snack-Lebensmittel, wobei das nicht frittierte Snack-Lebensmittel eine Scheibe mit einer Dicke von 1 bis 8 mm umfasst, wobei die Scheibe eine starre Stärkematrix, die Kartoffelstärke umfasst, und eine Vielzahl von einzelnen Stücken Gemüse und/oder Obst umfasst, die zufällig über die gesamte Matrix verteilt sind, wobei mindestens 50 % der Anzahl der Stücke eine Mindestabmessung von mindestens 0,75 mm und eine Höchstabmessung von bis zu 7 mm aufweisen, wobei die Matrix darin eine erste Zellstruktur von ersten Zellporen definiert, die eine erste Porengrößenverteilung aufweisen, und die Stücke darin eine zweite Zellstruktur von zweiten Zellporen definieren, die eine zweite Porengrößenverteilung aufweisen, mindestens einige der zweiten Zellporen durch Polysaccharid-Zellwände des entsprechenden Gemüses und/oder Obsts definiert sind, und die erste Porengrößenverteilung ein größeres Zahlenmittel der Porengröße und eine breitere Verteilung aufweist als die zweite Porengrößenverteilung, wobei Stärke in der starren Stärkematrix, bezogen auf das Gesamtgewicht der Stärke in der starren Stärkematrix, aus 100 Gew.-% Kartoffelstärke besteht und wobei das nicht frittierte Snack-Lebensmittel, bezogen auf die Trockenmasse, einen Gemüse- und/oder Obst-Feststoffgehalt an Stücken von 10 bis 30 Gew.-%, bezogen auf das Gewicht des nicht frittierten Snack-Lebensmittels, aufweist.

2. Nicht frittiertes Snack-Lebensmittel nach Anspruch 1, wobei die erste Porengrößenverteilung ein Zahlenmittel der Porengröße $\Phi_{2D}$ innerhalb des Bereichs von 100 bis 300 $\mu$m, vorzugsweise von 120 bis 250 $\mu$m, mit einer

normalisierten Standardabweichung von 0,75 bis 2, vorzugsweise von 0,85 bis 1,75, aufweist, und die zweite Porengrößenverteilung ein Zahlenmittel der Porengröße $\Phi_{2D}$ innerhalb des Bereichs von 20 bis 90 $\mu$m, vorzugsweise von 25 bis 75 $\mu$m, mit einer normalisierten Standardabweichung von 0,25 bis 0,9, vorzugsweise von 0,3 bis 0,75, aufweist.

3. Nicht frittiertes Snack-Lebensmittel nach Anspruch 1 oder Anspruch 2, wobei die erste Porengrößenverteilung ein Zahlenmittel der Porengröße $\Phi_{3D}$ innerhalb des Bereichs von 150 bis 375 $\mu$m, vorzugsweise von 150 bis 300 $\mu$m, aufweist, und die zweite Porengrößenverteilung ein Zahlenmittel der Porengröße $\Phi_{3D}$ innerhalb des Bereichs von 25 bis 100 $\mu$m, vorzugsweise von 25 bis 75 $\mu$m, aufweist.

4. Nicht frittiertes Snack-Lebensmittel nach einem der Ansprüche 1 bis 3, wobei die erste Porengrößenverteilung eine kleinere Anzahl von Poren pro Flächeneinheit $N_v$ aufweist als die zweite Porengrößenverteilung, wobei wahlweise die erste Porengrößenverteilung von 250 bis 2000, vorzugsweise von 450 bis 1250, Poren pro Flächeneinheit $N_v$ aufweist, und die zweite Porengrößenverteilung von $2,5 \times 10^3$ bis $1 \times 10^5$, vorzugsweise von $2,5 \times 10^3$ bis $5 \times 10^4$, Poren pro Flächeneinheit $N_v$ aufweist.

5. Nicht frittiertes Snack-Lebensmittel nach einem der Ansprüche 1 bis 4, wobei die ersten Zellporen ein Zahlenmittel des Anisotropie-Verhältnisses $R_{max}$ aufweisen, das größer als ein Zahlenmittel des Anisotropie-Verhältnisses der zweiten Zellporen ist, wobei die ersten Zellporen wahlweise ein Zahlenmittel des Anisotropie-Verhältnisses $R_{max}$ von 2 bis 2,75, vorzugsweise von 2,1 bis 2,6, aufweisen, und die zweiten Zellporen ein Zahlenmittel des Anisotropie-Verhältnisses $R_{max}$ von 1,25 bis 1,95, vorzugsweise von 1,35 bis 1,90, aufweisen.

6. Nicht frittiertes Snack-Lebensmittel nach einem der Ansprüche 1 bis 5, wobei:

(a) mindestens 90 % der Anzahl der Stücke eine Mindestabmessung von mindestens 1 mm oder mindestens 2 mm aufweisen; und/oder
(b) die Stücke Gemüsestücke umfassen oder daraus bestehen und mindestens ein Wurzelgemüse, das wahlweise ausgewählt ist aus Rote Beete und Karotten, und/oder mindestens ein Lauchgemüse, das wahlweise ausgewählt ist aus Zwiebeln, Knoblauch, Schalotten, Schnittlauch und Frühlingszwiebeln, und/oder mindestens ein Kürbisgemüse umfassen, das wahlweise ausgewählt ist aus Butternusskürbis, Kürbis, Spaghettikürbis, Gurke oder Zucchini; und/oder
(c) die Stücke Obststücke umfassen oder daraus bestehen, die wahlweise ausgewählt sind aus Apfel und Birne; und/oder
(d) (i) die Stücke Gemüse und/oder Obst umfassen, das, bezogen auf die Trockenmasse, bezogen auf das Gewicht der Gemüse- und/oder Obststücke in dem nicht frittierten Snack-Lebensmittel, weniger als 33 % Stärke umfasst, und/oder (ii) die Gemüse- und/oder Obststücke aus einer oder mehreren Gemüse- und/oder Obstsorten bestehen, die im rohen Zustand einen Stärkegehalt von nicht mehr als 5 Gew.-% und einen Wassergehalt von mindestens 85 Gew.-% aufweisen, wobei jedes Gew.-% auf das Gesamtgewicht des jeweiligen rohen Gemüses und/oder Obsts bezogen ist.

7. Nicht frittiertes Snack-Lebensmittel nach einem der Ansprüche 1 bis 6, wobei:

(a) das nicht frittierte Snack-Lebensmittel ein Gewichtsverhältnis von starrer Stärkematrix : Obst- und/oder Gemüsestücken von 1:9 bis 6:1 aufweist; und/oder
(b) der Feuchtegehalt des nicht frittierten Snack-Lebensmittels, bezogen auf das Gewicht des nicht frittierten Snack-Lebensmittels, von 0,5 bis 5 Gew.-% beträgt; und/oder
(c) die Scheibe in der Form eines Snack-Lebensmittel-Chips vorliegt und eine Dicke von 1 bis 5 mm, wahlweise von 1 bis 3 mm, ferner wahlweise von 1 bis 2 mm, aufweist.

8. Verfahren zur Herstellung eines gemüse- und/oder obsthaltigen nicht frittierten Snack-Lebensmittels nach einem der Ansprüche 1 bis 7, wobei das Verfahren die folgenden Schritte umfasst:

a. Bereitstellen eines Breis, der Kartoffelbrei umfasst, der zumindest teilweise gekocht wurde, wobei der Kartoffelbrei unter Verwendung frischer Kartoffeln, dehydrierter Kartoffeln oder einer beliebigen Kombination davon hergestellt wurde;
b. Bereitstellen einer Vielzahl von Stücken von mindestens einer frischen oder gefrorenen Nicht-Kartoffel-Gemüse- und/oder Obstzutat, die roh ist oder zumindest teilweise gekocht wurde, wobei mindestens 50 % der Anzahl der Stücke eine Mindestabmessung von mindestens 0,75 mm und eine Höchstabmessung von bis zu 7 mm aufweisen;

c. Zusammenmischen des Breis und der Stücke der mindestens einen Gemüse- und/oder Obstzutat, um ein Breigemisch zu bilden, das, bezogen auf das Gewicht des Teigs, einen Feuchtegehalt von 60 bis 80 Gew.-% aufweist;

d. Formen des Teiggemischs, mittels Stanzens, in eine Vielzahl von einzelnen Scheiben, die eine Dicke von 1 bis 8 mm aufweisen;

e. Mikrowellenkochen jeder Scheibe, um eine gekochte Zwischenscheibe herzustellen, die, bezogen auf das Gewicht der gekochten Zwischenscheibe, einen Feuchtegehalt von 25 bis 45 Gew.-% aufweist;

f. Kochen der gekochten Zwischenscheibe in einem Heißluft-Konvektionsofen, um eine gekochte Snack-Lebensmittelscheibe herzustellen, die, bezogen auf das Gewicht der gekochten Snack-Lebensmittelscheibe, einen Feuchtegehalt größer als 5 und bis zu 12 Gew.-% aufweist; und

g. Dehydrieren der gekochten Snack-Lebensmittelscheibe, um den Feuchtegehalt des resultierenden gekochten Produkts, bezogen auf das Gewicht der dehydrierten gekochten Snack-Lebensmittelscheibe, auf den Bereich von 0,5 bis 5 Gew.-% zu vermindern, wobei die dehydrierte gekochte Snack-Lebensmittelscheibe eine starre Stärkematrix und eine Vielzahl von einzelnen Stücken Gemüse und/oder Obst umfasst, die zufällig über die gesamte Matrix verteilt sind, wobei mindestens 50 % der Anzahl der Stücke eine Mindestabmessung von mindestens 0,75 mm und eine Höchstabmessung von bis zu 7 mm aufweisen,

wobei Stärke in der starren Stärkematrix, bezogen auf das Gesamtgewicht der Stärke in der starren Stärkematrix, aus 100 Gew.-% Kartoffelstärke besteht, und wobei das nicht frittierte Snack-Lebensmittel, bezogen auf die Trockenmasse, einen Gemüse- und/oder Obst-Feststoffgehalt von Stücken von 10 bis 30 Gew.-%, bezogen auf das Gewicht des nicht frittierten Snack-Lebensmittels, aufweist.

9. Verfahren nach Anspruch 8, wobei:

(a) der in Schritt a bereitgestellte Kartoffelbrei vorhergehend bei einer Temperatur von mindestens 80°C während eines Zeitraums von 5 bis 30 Minuten, wahlweise von 10 bis 20 Minuten, dampfgegart wird; und/oder
(b) die in Schritt b bereitgestellte mindestens eine Gemüse- und/oder Obstzutat vorhergehend bei einer Temperatur von mindestens 100°C während eines Zeitraums von 5 bis 15 Minuten, wahlweise von 5 bis 10 Minuten, dampfgegart wird.

10. Verfahren nach Anspruch 8 oder Anspruch 9, wobei:

(a) die in Schritt b bereitgestellten Stücke durch zumindest partielles Kochen frischen oder gefrorenen Gemüses und/oder Obsts und anschließendes Zerkleinern des zumindest teilweise gekochten Gemüses und/oder Obsts, um die Stücke zu bilden, hergestellt wird; und/oder
(b) die in Schritt b bereitgestellten Stücke rohes Gemüse und/oder Obst sind und zerkleinert werden, um die Gemüse- und/oder Obststücke zu bilden.

11. Verfahren nach einem der Ansprüche 8 bis 10, wobei:

(a) in Schritt e das Mikrowellenkochen der Teigscheiben bei einer Leistungsdichte von 15 bis 25 kW/kg während eines Zeitraums von 30 bis 150 Sekunden, wahlweise von 50 bis 100 Sekunden, durchgeführt wird; und/oder
(b) in Schritt f das Heißluft-Konvektionskochen bei einer Ofentemperatur von 120 bis 180°C während eines Zeitraums von 1 bis 5 Minuten, wahlweise etwa 3 Minuten, durchgeführt wird; und/oder
(c) in Schritt g das Dehydrieren in einem Trockner bei einer Trocknertemperatur von 100 bis 120°C während eines Zeitraums von 6 bis 15 Minuten durchgeführt wird.

12. Verfahren nach einem der Ansprüche 8 bis 11, wobei in der dehydrierten gekochten Snack-Lebensmittelscheibe mindestens 90 % der Anzahl der Stücke eine Mindestabmessung von mindestens 1 mm oder mindestens 2 mm aufweisen.

13. Verfahren nach einem der Ansprüche 8 bis 12, wobei:

(a) die in Schritt b bereitgestellten Gemüse- und/oder Obststücke aus einer oder mehreren Gemüse- und/oder Obstsorten bestehen, die einen Stärkegehalt von nicht mehr als 5 Gew.-% und einen Wassergehalt von mindestens 85 Gew.% aufweisen, wobei jedes Gew.-% auf das Gesamtgewicht der jeweiligen Rohgemüse- und/oder -obstsorte/n bezogen ist; und/oder

(b) die Stücke Gemüsestücke umfassen oder daraus bestehen und mindestens ein Wurzelgemüse, das wahlweise ausgewählt ist aus Rote Beete und Karotten, und/oder mindestens ein Lauchgemüse, das wahlweise ausgewählt ist aus Zwiebeln, Knoblauch, Schalotten, Schnittlauch und Frühlingszwiebeln, und/oder mindestens ein Kürbisgemüse umfassen, das wahlweise ausgewählt ist aus Butternusskürbis, Kürbis, Spaghettikürbis, Gurke oder Zucchini; und/oder

(c) die Stücke Obststücke umfassen oder daraus bestehen, die wahlweise ausgewählt sind aus Apfel und Birne.

14. Verfahren nach einem der Ansprüche 8 bis 13, wobei:

(a) die dehydrierte gekochte Snack-Lebensmittelscheibe ein Gewichtsverhältnis von starrer Stärkematrix : Obst- und/oder Gemüsestücken von 1:9 bis 6:1 aufweist; und/oder

(b) der Feuchtegehalt der dehydrierten gekochten Snack-Lebensmittelscheibe, bezogen auf das Gewicht der dehydrierten gekochten Snack-Lebensmittelscheibe, von 0,5 bis 2 Gew.-% beträgt; und/oder

(c) die dehydrierte gekochte Snack-Lebensmittelscheibe in der Form eines Snack-Lebensmittel-Chips vorliegt und eine Dicke von 1 bis 5 mm, wahlweise von 1 bis 3 mm, ferner wahlweise von 1 bis 2 mm, aufweist.

15. Verfahren nach einem der Ansprüche 8 bis 14, wobei das in Schritt c gebildete Teiggemisch, bezogen auf das Gesamtgewicht des Teiggemischs, bezogen auf das Nassgewicht, die folgenden Zutaten umfasst: 35 bis 65 Gew.-% püriertes, gehacktes und/oder geraspeltes Gemüse; 20 bis 50 Gew.-% Kartoffelbrei; 7 bis 16 Gew.-% dehydrierte/trockene Zutaten; und 1 bis 10 Gew.-% Kräuter und Gewürze.

## Revendications

1. En-cas non frit contenant des légumes et/ou des fruits, l'en-cas non frit comprenant une feuille ayant une épaisseur de 1 à 8 mm, la feuille comprenant une matrice d'amidon rigide comprenant de l'amidon de pomme de terre et une pluralité de morceaux individuels de légumes et/ou de fruits distribués au hasard dans toute la matrice, dans lequel au moins 50 % en nombre des morceaux ont une dimension minimale d'au moins 0,75 mm et une dimension maximale allant jusqu'à 7 mm, dans lequel la matrice définit en son sein une première structure cellulaire de premiers pores cellulaires ayant une première distribution de tailles de pores et les morceaux définissent en leur sein une deuxième structure cellulaire de deuxièmes pores cellulaires ayant une deuxième distribution de tailles de pores, au moins certains des deuxièmes pores cellulaires sont définis par des parois cellulaires de polysaccharides des légumes et/ou des fruits respectifs, et la première distribution de tailles de pores a une taille de pores moyenne en nombre plus grande et une distribution plus large que celles de la deuxième distribution de tailles de pores, dans lequel l'amidon dans la matrice d'amidon rigide consiste en 100 % en poids d'amidon de pomme de terre par rapport au poids total de l'amidon dans la matrice d'amidon rigide, et lequel en-cas non frit a une teneur en solides de légumes et/ou de fruits provenant des morceaux, sur une base sèche, de 10 à 30 % en poids par rapport au poids de l'en-cas non frit.

2. En-cas non frit selon la revendication 1, dans lequel la première distribution de tailles de pores a une taille de pores moyenne en nombre $\Phi_{2D}$ située dans la plage allant de 100 à 300 $\mu$m, de préférence de 120 à 250 $\mu$m, avec un écart type normalisé de 0,75 à 2, de préférence de 0,85 à 1,75, et la deuxième distribution de tailles de pores a une taille de pores moyenne en nombre $\Phi_{2D}$ située dans la plage allant de 20 à 90 $\mu$m, de préférence de 25 à 75 $\mu$m avec un écart type normalisé de 0,25 à 0,9, de préférence de 0,3 à 0,75.

3. En-cas non frit selon la revendication 1 ou la revendication 2, dans lequel la première distribution de tailles de pores a une taille de pores moyenne en nombre $\Phi_{3D}$ située dans la plage allant de 150 à 375 $\mu$m, de préférence de 150 à 300 $\mu$m, et la deuxième distribution de tailles de pores a une taille de pores moyenne en nombre $\Phi_{3D}$ située dans la plage allant de 25 à 100 $\mu$m, de préférence de 25 à 75 $\mu$m.

4. En-cas non frit selon l'une quelconque des revendications 1 à 3, dans lequel la première distribution de tailles de pores a un nombre de pores par unité de surface, $N_v$, inférieur à celui de la deuxième distribution de tailles de pores, éventuellement dans lequel la première distribution de tailles de pores a de 250 à 2 000, de préférence de 450 à 1 250 pores par unité de surface $N_v$ et la deuxième distribution de tailles de pores a de $2,5 \times 10^3$ à $1 \times 10^5$, de préférence de $2,5 \times 10^3$ à $5 \times 10^4$ pores par unité de surface $N_v$.

5. En-cas non frit selon l'une quelconque des revendications 1 à 4, dans lequel les premiers pores cellulaires ont un rapport d'anisotropie moyen en nombre $R_{max}$ qui est supérieur au rapport d'anisotropie moyen en nombre des deuxièmes pores cellulaires, éventuellement dans lequel les premiers pores cellulaires ont un rapport d'anisotropie

moyen en nombre $R_{max}$ de 2 à 2,75, de préférence de 2,1 à 2,6, et les deuxièmes pores cellulaires ont un rapport d'anisotropie moyen en nombre $R_{max}$ de 1,25 à 1,95, de préférence de 1,35 à 1,90.

6. En-cas non frit selon l'une quelconque des revendications 1 à 5, dans lequel :

(a) au moins 90 % en nombre des morceaux ont une dimension minimale d'au moins 1 mm, ou d'au moins 2 mm ; et/ou
(b) les morceaux comprennent ou consistent en des morceaux de légumes et comprennent au moins un légume racine, éventuellement choisi parmi la betterave et la carotte, et/ou au moins un légume alliacé, éventuellement choisi parmi l'oignon, l'ail, l'échalotte, la cive et la ciboule, et/ou au moins un légume cucurbitacée, éventuellement choisi parmi la courge butternut, le potiron, la courge spaghetti, le concombre, et la courge à moelle ; et/ou
(c) les morceaux comprennent ou consistent en des morceaux de fruits, éventuellement choisis parmi la pomme et la poire ; et/ou
(d) (i) les morceaux comprennent des légumes et/ou des fruits comprenant moins de 33 % en poids d'amidon sur une base sèche par rapport au poids des morceaux de légumes et/ou de fruits dans l'en-cas non frit, et/ou (ii) les morceaux de légumes et/ou de fruits sont constitués d'un ou plusieurs légumes et/ou fruits qui, à l'état cru, ont une teneur en amidon non supérieure à 5 % en poids et une teneur en eau d'au moins 85 % en poids, tous les pourcentages en poids étant basés sur le poids total du ou des légumes et/ou fruits crus respectifs.

7. En-cas non frit selon l'une quelconque des revendications 1 à 6, dans lequel :

(a) l'en-cas non frit a un rapport en poids de la matrice d'amidon rigide aux morceaux de légumes et/ou de fruits de 1/9 à 6/1 ; et/ou
(b) la teneur en humidité de l'en-cas non frit est de 0,5 à 5 % en poids par rapport au poids de l'en-cas non frit ; et/ou
(c) la feuille est sous la forme d'une chips d'en-cas et a une épaisseur de 1 à 5 mm, éventuellement de 1 à 3 mm, encore plus éventuellement de 1 à 2 mm.

8. Procédé de fabrication d'un en-cas non frit contenant des légumes et/ou des fruits de l'une quelconque des revendications 1 à 7, le procédé comprenant les étapes de :

a. fourniture d'une purée comprenant de la purée de pommes de terre qui a été au moins partiellement cuite, dans laquelle la purée de pommes de terre a été produite avec des pommes de terre fraîches, des pommes de terre déshydratées ou l'une quelconque de leurs combinaisons ;
b. fourniture d'une pluralité de morceaux d'au moins un ingrédient légume et/ou fruit non pomme de terre frais ou congelé qui est cru ou qui a été au moins partiellement cuit, dans laquelle au moins 50 % en nombre des morceaux ont une dimension minimale d'au moins 0,75 mm et une dimension maximale allant jusqu'à 7 mm ;
c. mélange ensemble de la purée et des morceaux de l'au moins un ingrédient légume et/ou fruit pour former un mélange pâteux qui a une teneur en humidité de 60 à 80 % en poids par rapport au poids de la pâte ;
d. formation du mélange de pâte, par découpe à l'emporte-pièce, en une pluralité de feuilles individuelles ayant une épaisseur de 1 à 8 mm ;
e. cuisson aux micro-ondes de chaque feuille pour produire une feuille cuite intermédiaire qui a une teneur en humidité de 25 à 45 % en poids par rapport au poids de la feuille cuite intermédiaire ;
f. cuisson de la feuille cuite intermédiaire dans un four à convexion d'air chaud pour produire une feuille d'en-cas cuite ayant une teneur en humidité allant de plus de 5 jusqu'à 12 % en poids par rapport au poids de la feuille d'en-cas cuite ; et
g. déshydratation de la feuille d'en-cas cuite pour réduire la teneur en humidité du produit cuit résultant dans la plage allant de 0,5 à 5 % en poids par rapport au poids de la feuille d'en-cas cuite déshydratée, dans laquelle la feuille d'en-cas cuite déshydratée comprend une matrice d'amidon rigide et une pluralité de morceaux individuels de légumes et/ou de fruits distribués au hasard dans toute la matrice, dans laquelle au moins 50 % en nombre des morceaux ont une dimension minimale d'au moins 0,75 mm et une dimension maximale allant jusqu'à 7 mm,

dans lequel l'amidon dans la matrice d'amidon rigide consiste en 100 % en poids d'amidon de pomme de terre par rapport au poids total de l'amidon dans la matrice d'amidon rigide, et lequel en-cas non frit a une teneur en solides de légumes et/ou de fruits provenant des morceaux, sur une base sèche, de 10 à 30 % en poids par rapport au poids de l'en-cas non frit.

9. Procédé selon la revendication 8, dans lequel :

(a) la purée de pommes de terre en purée fournie dans l'étape a est préalablement cuite à la vapeur à une température d'au moins 80°C pendant une période de 5 à 30 minutes, éventuellement de 10 à 20 minutes ; et/ou
(b) l'au moins un ingrédient légume et/ou fruit fourni dans l'étape b est préalablement cuit à la vapeur à une température d'au moins 100°C pendant une période de 5 à 15 minutes, éventuellement de 5 à 10 minutes.

10. Procédé selon la revendication 8 ou la revendication 9, dans lequel :

(a) les morceaux fournis dans l'étape b sont produits par cuisson au moins partielle de légumes et/ou de fruits frais ou congelés et ensuite fragmentation des légumes et/ou des fruits au moins partiellement cuits pour former les morceaux ; et/ou
(b) les morceaux fournis dans l'étape b sont des légumes et/ou des fruits crus qui sont fragmentés pour former les morceaux de légumes et/ou de fruits.

11. Procédé selon l'une quelconque des revendications 8 à 10, dans lequel :

(a) dans l'étape e, la cuisson aux micro-ondes est effectuée à une densité d'énergie de 15 à 25 kW/kg des feuilles de pâte pendant une période de 30 à 150 secondes, éventuellement de 50 à 100 secondes ; et/ou
(b) dans l'étape f, la cuisson par convexion d'air chaud est effectuée à une température de four de 120 à 180°C pendant une période de 1 à 5 minutes, éventuellement d'environ 3 minutes ; et/ou
(c) dans l'étape g, la déshydratation est effectuée dans un déshydrateur à une température de déshydrateur de 100 à 120°C pendant une période de 6 à 15 minutes.

12. Procédé selon l'une quelconque des revendications 8 à 11, dans lequel, dans la feuille d'en-cas cuite déshydratée, au moins 90 % en nombre des morceaux ont une dimension minimale d'au moins 1 mm, ou d'au moins 2 mm.

13. Procédé selon l'une quelconque des revendications 8 à 12, dans lequel :

(a) les morceaux de légumes et/ou de fruits fournis dans l'étape b sont constitués d'un ou plusieurs légumes et/ou fruits qui ont une teneur en amidon non supérieure à 5 % en poids et une teneur en eau d'au moins 85 % en poids, tous les pourcentages en poids étant basés sur le poids total du ou des légumes et/ou fruits crus respectifs ; et/ou
(b) les morceaux comprennent ou consistent en des morceaux de légumes et comprennent au moins un légume racine, éventuellement choisi parmi la betterave et la carotte, et/ou au moins un légume alliacé, éventuellement choisi parmi l'oignon, l'ail, l'échalotte, la cive et la ciboule, et/ou au moins un légume cucurbitacée, éventuellement choisi parmi la courge butternut, le potiron, la courge spaghetti, le concombre, et la courge à moelle ; et/ou
(c) les morceaux comprennent ou consistent en des morceaux de fruits, éventuellement choisis parmi la pomme et la poire.

14. Procédé selon l'une quelconque des revendications 8 à 13, dans lequel :

(a) la feuille d'en-cas cuite déshydratée a un rapport en poids de la matrice d'amidon rigide aux morceaux de légumes et/ou de fruits de 1/9 à 6/1 ; et/ou
(b) la teneur en humidité de la feuille d'en-cas cuite déshydratée 0,5 à 2 % en poids par rapport au poids de la feuille d'en-cas cuite déshydratée ; et/ou
(c) la feuille d'en-cas cuite déshydratée est sous la forme d'une chips d'en-cas et a une épaisseur de 1 à 5 mm, éventuellement de 1 à 3 mm, encore plus éventuellement de 1 à 2 mm.

15. Procédé selon l'une quelconque des revendications 8 à 14, dans lequel le mélange de pâte formé dans l'étape c comprend les ingrédients suivants, par rapport au poids total du mélange de pâte et sur la base du poids sec : 35 à 65 % en poids de légume(s) en purée, haché(s) et/ou émincés ; 20 à 50 % en poids de purée de pommes de terre ; 7 à 16 % en poids d'ingrédients déshydratés/secs ; et 1 à 10 % en poids d'herbes aromatiques et d'épices.

**Figure 1**

**Figure 2**

Figure 3

Figure 4

Figure 5

## Figure 6

## Figure 7

Figure 8

70

72

1.5 cm

Figure 9

$t_{perp}$

$t_{max}$

**Figure 10**

**Figure 11**

# Figure 12

# Figure 13

**Figure 14a**

**Prior Art**

**Figure 14b**

**Prior Art**

**EP 3 989 739 B1**

**Patent documents cited in the description**

- US 4970084 A